# EUROPEAN PATENT APPLICATION

(11) **EP 3 442 215 A1**
(43) Date of publication of application: **13.02.2019**
(21) Application number: 17779180.3
(22) Date of filing: 05.04.2017
(51) Int. Cl.: H04N 5/232, G03B 7/091, H04N 5/341, H04N 5/91

(54) **IMAGE PROCESSING DEVICE, ELECTRONIC APPARATUS, PLAYBACK DEVICE, PLAYBACK PROGRAM, AND PLAYBACK METHOD**

(30) Priority: 06.04.2016 JP 2016076527
(71) Applicant: Nikon Corporation, Tokyo 108-6290 (JP)
(72) Inventor: MIYAKAWA, Yoshiaki, Tokyo 108-6290 (JP); YAMAGATA, Naoki, Tokyo 108-6290 (JP)
(74) Representative: Hoffmann Eitle
(86) International application number: PCT/JP2017/014264
(87) International publication number: WO 2017/175802

(57) **Abstract**

An image processing device includes: a read-out unit that reads out an image of a subject captured in a first imaging region of an image sensor to which a first imaging condition is set and an image of the subject captured in a second imaging region of the image sensor to which a second imaging condition is set, and the first imaging condition and the second imaging condition; and a specifying unit that specifies a subject to be subjected to image processing from the images by using the first imaging condition and the second imaging condition that have been read out by the read-out unit.

## Description

### TECHNICAL FIELD

The present invention relates to an image processing device, an electronic apparatus, a reproduction device, a reproduction program, and a reproduction method.

### BACKGROUND ART

An image capturing device is known which performs image capturing over different exposure times for different imaging regions (refer to PTL1). Nothing is referred to about recording of imaging conditions for respective imaging regions in PTL1.

### CITATION LIST

### PATENT LITERATURE

PTL1: Japanese Laid-Open Patent Publication No. 2006-197192.

### SUMMARY OF INVENTION

According to a first embodiment of the present invention, an image processing device comprises: a read-out unit that reads out an image of a subject captured in a first imaging region of an image sensor to which a first imaging condition is set and an image of the subject captured in a second imaging region of the image sensor to which a second imaging condition is set, and the first imaging condition and the second imaging condition; and a specifying unit that specifies a subject to be subjected to image processing from the images by using the first imaging condition and the second imaging condition that have been read out by the read-out unit.

According to a second aspect of the present invention, an image processing device comprises: a read-out unit that reads out a first imaging condition and a second imaging condition from a recording unit in which the first imaging condition set for a first imaging region of an image sensor and the second imaging condition set for a second imaging region of the image sensor are recorded, the image sensor having a plurality of imaging regions for which respective imaging conditions are set; and a setting unit that sets, to an image being read out by the read-out unit, a region of the subject captured under the first imaging condition and a region of the subject captured under the second imaging condition.

According to a third embodiment of the present invention, an image processing device comprises: a read-out unit that reads out an imaging condition and an image from a recording unit; and a specifying unit that specifies a subject to be subjected to image processing based on the image by using the read out imaging condition.

According to a fourth aspect of the present invention, an image processing device comprises: a read-out unit that reads out an imaging condition from a recording unit having recorded thereat imaging conditions being set to a plurality of imaging regions of an image sensor, the image sensor being capable of setting respective imaging conditions for the imaging regions; and a setting unit that sets a region of a subject captured under the imaging condition from an image read out by the read-out unit.

According to a fifth aspect of the present invention, an electronic apparatus comprises: an image sensor having a plurality of imaging regions that captures an image of a subject and outputs image data; a setting unit capable of setting different imaging conditions for the imaging regions; and an image processing unit that specifies a region to be subjected to image processing from the image data outputted from the image sensor by using an image condition being set by the setting unit.

According to a sixth aspect of the present invention, an electronic apparatus comprises: an input unit that inputs information about positions of a plurality of imaging regions of an image capturing unit for which different imaging conditions can be set, and the imaging conditions for the plurality of imaging regions; and a generation unit that generates information relating to the imaging regions based on the information about the positions and the imaging conditions inputted by the input unit.

According to a seventh aspect of the present invention, a reproduction device comprises: an input unit that inputs image data generated by an image capturing unit including a plurality of imaging regions having mutually different imaging conditions and an imaging condition for each imaging region; and a reproduction unit that generates information relating the imaging region based on the imaging condition inputted by the input unit and reproduces the image data using the generated information relating to the imaging region.

According to an eighth aspect of the present invention, a reproduction program causes a computer to execute an inputting step for inputting image data generated by an image capturing unit including a plurality of imaging regions having mutually different imaging conditions and an imaging condition for each imaging region; and a reproducing step for generating information relating the imaging region based on the imaging condition inputted through the input step and reproducing the image data using the generated information relating to the imaging region.

According to a ninth aspect of the present invention, in a reproduction method, image data generated by an imaging unit including a plurality of imaging regions having mutually different imaging conditions and an imaging condition for each imaging region is inputted; and information relating to the imaging region based on the inputted imaging condition is generated and the image data using the generated information relating to the imaging region is reproduced.

### BRIEF DESCRIPTION OF DRAWINGS

FIG. 1 is a block diagram showing the configuration of an image capturing device according to a first embodiment of the present invention.
FIG. 2 shows plan views schematically showing the imaging surface of an image sensor.
FIG. 3 is a schematic diagram showing the configuration of an image file according to an embodiment of the present invention.
FIG. 4 shows illustrative diagrams for explaining a still-image image capturing function A.
FIG. 5 is a diagram schematically showing the configuration of an image file that is generated upon performing image capturing using the still-image image capturing function A.
FIG. 6 shows illustrative diagrams for explaining a motion-image image capturing function A.
FIG. 7 is a drawing schematically showing the configuration of an image file that is generated upon performing image capturing using the motion-image image capturing function A.
FIG. 8 shows illustrative diagrams for explaining a still-image image capturing function B.
FIG. 9 shows diagrams showing an example of the layout of a large group.
FIG. 10 is a diagram schematically showing the configuration of an image file that is generated upon performing image capturing using the still-image image capturing function B.
FIG. 11 is an illustrative diagram for explaining a motion-image image capturing function B.
FIG. 12 is an illustrative diagram for explaining a motion-image image capturing function B.
FIG. 13 is a drawing schematically showing the configuration of an image file that is generated upon performing image capturing using the motion-image image capturing function B.
FIG. 14 is an illustrative diagram for explaining a mixed image capturing function.
FIG. 15 is a drawing schematically showing the configuration of an image file that is generated upon performing image capturing using the mixed image capturing function.
FIG. 16 is a diagram schematically showing the directory structure of a memory card according to a second embodiment.
FIG. 17 shows diagrams schematically showing the structure of each file according to the second embodiment.
FIG. 18 is a diagram schematically showing the structure of each file according to the second embodiment.
FIG. 19 is an illustrative diagram for explaining Variation Example 2.
FIG. 20 is an illustrative diagram for explaining Variation Example 3.
FIG. 21 is an illustrative diagram for explaining Variation Example 4.
FIG. 22 is an illustrative diagram for explaining Variation Example 7.
FIG. 23 is a cross-sectional view of a laminated type image sensor.
FIG. 24 is a diagram for explaining a pixel array and a block of an image capturing chip.
FIG. 25 is a circuit diagram that corresponds to a unit of an image capturing chip.
FIG. 26 is a diagram schematically showing the structure of an image file according to Variation Example 1.
FIG. 27 is a diagram schematically showing the structure of a data section in an image file according to Variation Example 1.
FIG. 28 shows illustrative diagrams for explaining Variation Example 6.
FIG. 29 is a diagram schematically showing the structure of an image file (still image) recorded in a batch storage mode (time series type) according to a third embodiment.
FIG. 30 is a diagram schematically showing the structure of an image file (still-image, motion-image) recorded in a batch storage mode (time series type) according to the third embodiment.
FIG. 31 is a diagram schematically showing the structure of an image file recorded in a batch recording mode (image set type) according to the third embodiment.
FIG. 32 shows diagrams schematically showing mask information and HDR mask information according to the third embodiment.
FIG. 33 is a diagram showing the structure of an image file recorded in a divided storage mode according to the third embodiment.

### DESCRIPTION OF EMBODIMENTS

### First Embodiment

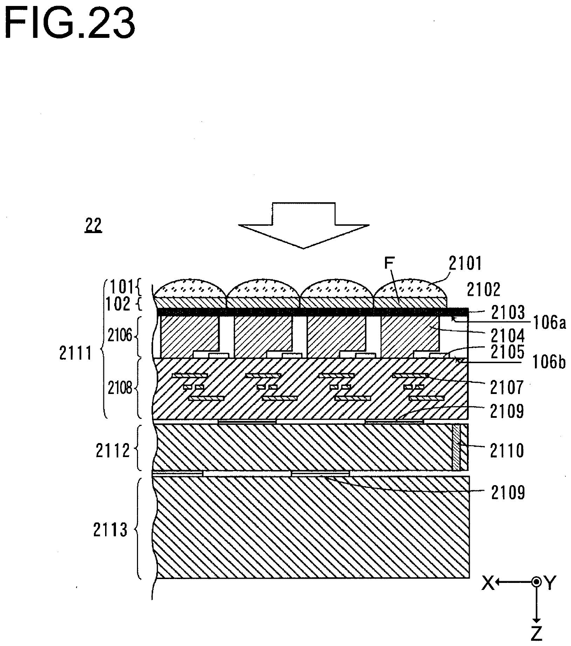

At first, explanation will be made on a laminated type image sensor 22 to be mounted on an electronic apparatus (for instance, image capturing device 10) according to an embodiment of the present invention. This laminated type image sensor 22 is described in WO2013/164915, which was filed earlier by the applicant of this application. Fig. 23 is a sectional view of the laminated type image sensor 22. The image sensor 22 includes a backside illumination type image capturing chip 2111 that outputs a pixel signal corresponding to incident light, a signal processing chip 2112 that processes the pixel signal, and a memory chip 2113 that stores the pixel signal. The image capturing chip 2111, the signal processing chip 2112, and the memory chip 2113 are laminated together, and are electrically connected with each other via connection parts 2109 made of Cu or the like withe the electric conductivity.

Note that, as illustrated in Fig. 23, incident light is incident mainly in the Z axis positive direction that is indicated with an outlined white arrow. Also, as indicated with coordinate axes, the leftward direction on the figure that is orthogonal to the Z axis is referred to as the X axis positive direction and the front side direction in the figure that is orthogonal to the Z and X axes is referred to as the Y axis positive direction. In several figures mentioned below, the coordinate axes are displayed such that the orientation of each figure can be known on the basis of the coordinate axes in Fig. 23.

The image capturing chip 2111 is, for example, a CMOS image sensor. The image capturing chip 2113 is specifically a backside illumination type MOS image sensor. The image capturing chip 2111 includes a micro lens layer 2101, a color filter layer 2102, a passivation layer 2103, a semiconductor layer 2106, and a wire layer 108. In the image capturing chip 2111, the micro lens layer 2101, the color filter layer 2102, the passivation layer 2103, the semiconductor layer 2106, and the wire layer 108 are arranged in order along the Z axis positive direction.

The microlens layer 2101 includes a plurality of microlenses L. The microlens L condenses incident light at a photoelectric conversion unit 2104 described later. The color filter layer 2102 includes a plurality of color filters F. The color filter layer 2102 includes a plurality of types of color filters F having different spectral characteristics. Specifically, it includes a first filter (R) having a spectral characteristic that mainly allows transmission of the red light component, a second filter (Gb. Gr) having a spectral characteristic that mainly allows transmission of the green light component, and a third filter (B) having a spectral characteristic that mainly allows transmission of the blue light component. The color filter layer 102 has a configuration in which the first, the second, and the third filters are arranged in a Bayer array, for example. The passivation layer 2103 comprises a nitride layer or an oxide layer to protect the semiconductor layer 2106.

The semiconductor layer 2106 includes photoelectric conversion units 2104 and read-out circuits 2105. The semiconductor layer 2106 has a first surface 2106a through which light enters and a second surface 2106b opposite to the first surface 2106, with a plurality of photoelectric conversion units 2104 being arranged therebetween. In the semiconductor layer 2106, the photoelectric conversion units 2104 are arranged in the X axis direction and in the Y axis direction. The photoelectric conversion unit 104 has a photoelectric conversion function to convert light into charge. The photoelectric conversion unit 104 also accumulates charges according to a photoelectric conversion signal. The photoelectric conversion unit 104 may be, for example, a photodiode. In the semiconductor layer 2106, the read-out circuits 105 are disposed closer to the second surface 2106b than the photoelectric conversion units 2104 are. In the semiconductor layer 2106, the read-out circuits 2105 are arranged in the X axis direction and in the Y axis direction. The read-out circuit 2105, which comprises a plurality of transistors, reads out image data generated by using charges that have been photoelectrically converted by the photoelectric conversion unit 2104 and outputs the read out image data to the wire layer 2108.

The wire layer 2108 has a plurality of metal layers. The metal layers include, for example, an Al wire and a Cu wire. To the wire layer 2108 is outputted the image data read out by the read-out circuits 2105. The image data is outputted through the wire layer 2108 to a signal processing chip 2112 through the connection parts 2109.

Note that the connection part 2109 may be provided for each of the photoelectric conversion units 2104. Also, it may be provided for each set consisting of a plurality of photoelectric conversion units 2104. In the case where the connection part is provided for each set consisting of the photoelectric conversion units 2104, the connection parts 2109 may be provided at a pitch larger than a pitch at which the photoelectric conversion units 2104 are provided. The connection part or parts 2104 may be provided in a region around the region in which the photoelectric conversion unit or units 2104 are arranged.

The signal processing chip 2112 has a plurality of signal processing circuits and performs signal processing on the image data outputted from the image capturing chip 2111. The signal processing circuits includes, for example, an amplifier circuit that amplifies the signal value of image data, a correlated double sampling circuit, and an analog/digital (A/D) conversion circuit that coverts an analog signal into a digital signal. The signal processing circuit may be provided for each photoelectric conversion unit 2104.

The signal processing circuit may also be provided for each set consisting of a plurality of photoelectric conversion units 2104. The signal processing chip 2112 has a plurality of through electrodes 2110. The through electrode 2110 may, for example, be a through-silicon via. The through electrode 2110 connects circuits provided at the signal processing chip 2112 with each other. The through electrode 2110 may also be provided in the peripheral region of the image capturing chip 2111 or at the memory chip 2113. Note that some of elements that constitute the signal processing circuit may be disposed at the image capturing chip 2111. For an example of an analog/digital conversion circuit, a comparator which performs comparison of input voltage with reference voltage may be disposed at the image capturing chip 111 while circuits such as a counter circuit and a latch circuit may be disposed at the image processing chip 2112.

The memory chip 2113 has a plurality of storage unit. The storage unit stores the image data on which signal processing is performed at the signal processing chip 2112. The storage unit comprises, for example, a volatile memory such as a DRAM. The storage unit may be provided for each of the photoelectric conversion units 2104. The storage unit may also be provided for each set consisting of a plurality of photoelectric conversion units 2104. The image data stored at the storage unit is outputted to an image processing unit in a later stage.

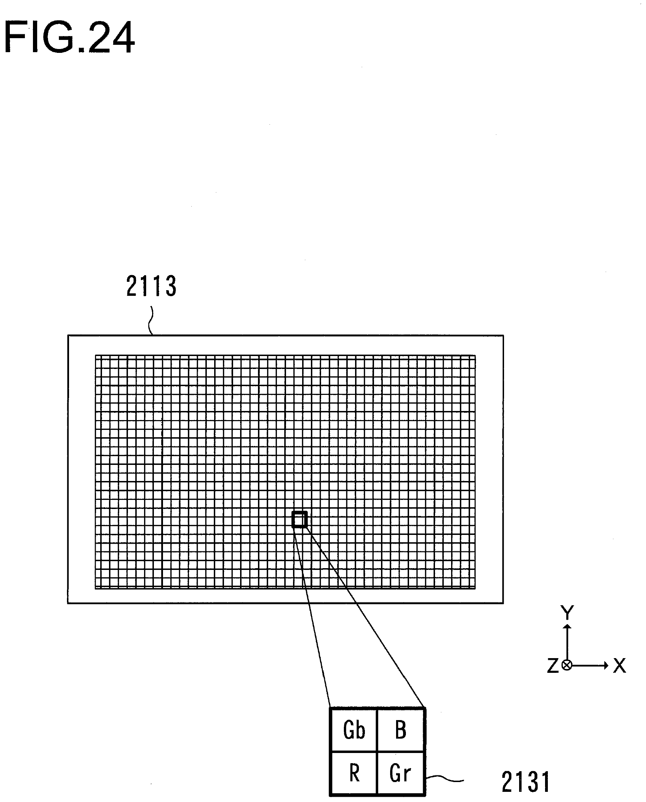

FIG. 24 is a diagram illustrating the pixel array of the image capturing chip 2111 and a unit region 2131 thereof. This diagram shows, in particular, the image capturing chip 2111 as seen from the side of the back surface (image capturing plane). The pixel region includes, for example, 20,000,000 or more pixels arranged in a matrix. In the example shown in FIG. 24, adjacent 2 by 2 pixels, i.e., 4 pixels form one unit region 2131. The grid line in the diagram illustrates a concept that adjacent four pixels are grouped to form the unit region 2131. The number of the pixels that form the unit region 2131 is not limited to that of the illustrated example, and may be 1,000 or so, for example, 32 by 32 pixels or more or less. The unit region may comprise only one pixel.

As shown in a partial enlarged view of the pixel region, the unit region 2131 shown in FIG. 24 includes a so-called the Bayer array consisting of four pixels, i.e., green pixels Gb, Gr, a blue pixel B, and a red pixel R. The green pixels Gb, Gr each have a green filter as the color filter F and receive light in a green wavelength zone in the incident light. Similarly, the blue pixel B has a blue filter as the color filter F and receives light in a blue wavelength zone and the red pixel R has a red filter as the color filter F and receives light in a red wavelength zone.

In this embodiment, a plurality of blocks is defined so that each block includes at least one unit region 2131. In other words, the smallest unit of each block is one unit region 2131. As described above, the number of pixels that form one unit region 2131 can take the least value of one pixel as well as other values. Therefore, for defining one block by pixel, the smallest number of pixels among the numbers of pixels that can define one block is one pixel. Pixels included in different blocks can be controlled with different control parameters. Each block is controlled so that all the unit regions 2131 included therein, that is, all the pixels included therein, are controlled with the same imaging conditions. In other words, a pixel group included in one block and a pixel group included in another block can acquire respective photoelectric conversion signals that correspond to different imaging conditions. Examples of the control parameter include frame rate, gain, thinning or decimation rate, number of rows or columns for adding together photoelectric conversion signals, accumulation time or accumulation frequency of charges, and bit number for digitizing (word length). The image sensor 22 can freely perform not only thinning in the row direction (X axis direction of the image capturing chip 2111) but also thinning in the column direction (Y axis direction of the image capturing chip 2111). The control parameters may also be those that are used in image processing.

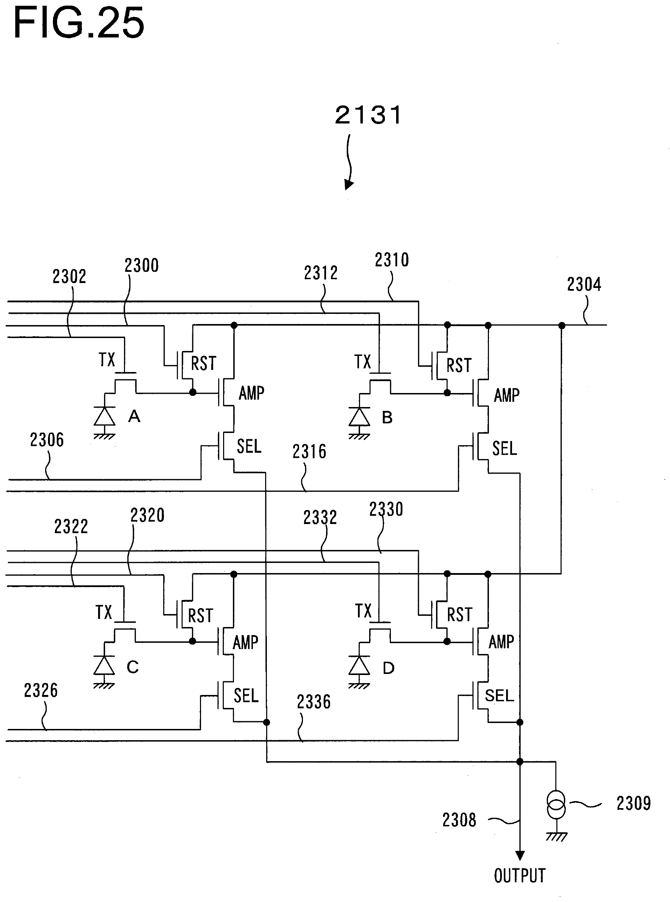

FIG. 25 is a diagram illustrating the circuit for the unit region 2131. In the example shown in FIG. 25, adjacent 2 by 2 pixels, i.e., four pixels form one unit region 2131. Note that the number of pixels included in the unit region 2131 is not limited to this number and may be 1,000 pixels or more or in the least one pixel. The two-dimensional position of the unit region 2131 is indicated with symbols A to D.

Reset transistors (RST) for pixels included in the unit region 2131 are configured to be capable of being turned on/off individually for each pixel. In FIG. 25, a reset wire 2300 for turning on/off the reset transistor for the pixel A is provided and separately from the reset wire 2300, a reset wire 2310 for turning on/off the reset transistor for the pixel B is provided. Similarly, a reset wire 2320 for turning on/off the reset transistor for the pixel C is provided separately from the reset wires 2300 and 2310. For another pixel D, a reset wire 2330 dedicated for turning on/off the reset transistor is provided.

Also, transfer transistors (TX) included in the unit region 2131 are configured to be capable of being turned on/off individually for each pixel. In FIG. 25, a transfer wire 2302 for turning on/off the transfer transistor for the pixel A, a transfer wire 2312 for turning on/off the transfer transistor for the pixel B, and a transfer wire 2322 for turning on/off the transfer transistor for the pixel C are provided individually. For another pixel D, a transfer wire 2332 dedicated for turning on/off the transfer transistor is provided.

Furthermore, selection transistors (SEL) for pixels included in the unit region 2131 are configured to be capable of being turned on/off individually for each pixel. In FIG. 25, a selection wire 2306 for turning on/off the selection transistor for the pixel A, a selection wire 2316 for turning on/off the selection transistor for the pixel B, and a selection wire 2326 for turning on/off the selection transistor for the pixel C are provided individually. For another pixel D, a selection wire 2336 dedicated for turning on/off the selection transistor is provided.

Note that a common power supply wire 2304 is connected to the pixels A to D included in the unit region 2131. Similarly, a common output wire 2308 is connected to the pixels A to D included in the unit region 2131. The power supply wire 2304 is also commonly connected to a plurality of unit regions while the output wire 2308 is provided individually for each unit region 2131. A load current source 2309 supplies current to the output wire 2308. The load current source 2309 may be provided either on the side of the image capturing chip 2111 or on the side of the signal processing chip 2112.

Individually turning on/off the reset transistors and the transfer transistors included in the unit region 2131 enables control of charge accumulation, more particularly control of start time for charge accumulation, completion time for charge accumulation, and timing for transfer for the pixels A to D included in the unit region 2131. Also, individually turning on/off the selection transistors included in the unit region 2131 enables photoelectric signals of the pixels A to D to be outputted through the common output wire 2308.

Here, a method of controlling accumulation of charges of the pixels A to D included in the unit region 131 in regular order for both row and column, i.e., a so-called rolling shutter method, is known. By selecting pixels in each row and then designating columns by using the rolling shutter method, photoelectric conversion signals are outputted in the order of "ABCD" in the example shown in FIG. 25.

As described above, making the circuit on the basis of the unit region 2131 enables charge accumulation time to be controlled for each unit region 2131. In other words, it is possible to cause photoelectric conversion signals to be outputted at different frame rates for different unit regions 2131. In addition, a configuration may be adopted so that the unit regions 2131 included in some blocks in the image capturing chip 2111 perform charge accumulation (image capturing) while the unit regions 2131 included in the rest of blocks perform no charge accumulation, thereby causing image capturing to occur exclusively at predetermined blocks included in the image capturing chip 2111 to output photoelectrically converted signals thereof. Furthermore, the block that performs charge accumulation (image capturing) (i.e., target block for accumulation control) may be switched from one to another among the frames to allow sequential image capturing at different blocks of the image capturing chip 2111 to output photoelectrically converted signals accordingly.

As described above, the output wire 2308 is provided to each of the unit regions 2131. Since the image sensor 22 includes the image capturing chip 2111, the signal processing chip 2112, and the memory chip 2113 being laminated together, adopting electric connection among the chips that is achieved by using the connection parts 2109 as the output wires 2308 enables the wire to be provided without enlarging each chip in the planar direction.

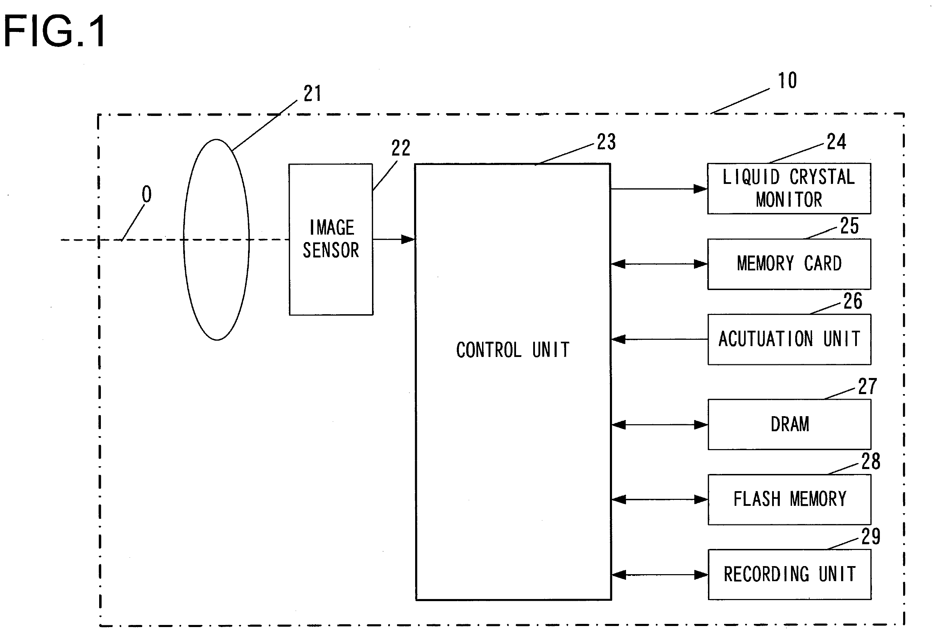

FIG. 1 is a block diagram showing the configuration of an image capturing device according to a first embodiment. An image capturing device 10 is a lens-integrated type camera. The image capturing device 10 includes an image capturing optical system 21, an image sensor 22, a control unit 23, a liquid crystal monitor 24, a memory card 25, an actuation unit 26, a DRAM 27, a flash memory 28, and a recording unit 29.

The image capturing optical system 21 is constituted by a plurality of lenses and forms a subject image upon an imaging surface of the image sensor 22. Note that in FIG. 1, the image capturing optical system 21 is shown as a single lens.

The image sensor 22 is an image sensor such as, for instance, CMOS or CCD, which picks up a subject image that is formed by the image capturing optical system 21 and outputs an imaging signal. The control unit 23, which is an electronic circuit that controls each unit of the image capturing device 10, includes a CPU and its peripheral circuit. The flash memory 28, which is a nonvolatile recording medium, has written therein a predetermined control program in advance. The control unit 23 includes a recording control section, a generation section, a read-out section, a specifying section, and a setting section, reads the control program from the flash memory 28, and executes it, thereby controlling each section. This control program uses the DRAM 27, which is a volatile recording medium, as a workspace.

The liquid crystal monitor 24 is a display device that has a liquid crystal panel. The control unit 23 allows the image sensor 22 to pick up a subject image repeatedly at a predetermined cycle (for instance, 1/60 second). Then, the image signal outputted from the image sensor 22 is subjected to various types of image processing to generate a so-called through-image or live view image, which is displayed on the liquid crystal monitor 24. On the liquid crystal monitor 24 is displayed, for instance, a setting screen, on which imaging parameters (imaging conditions) are to be set, as well as the through-image.

The recording control section of the control unit 23 generates an image file as described below based on an image signal, which is outputted from the image sensor 22 and inputted through a non-illustrated inputting unit, and records the image file in the memory card 25, which is a portable recording medium. The actuation unit 26 has various types of actuation members, such as push buttons, and outputs actuation signals to the control unit 23 in response to the actuation of the actuation members. The recording unit 29, which is constituted by, for instance, a microphone, converts environmental sound into audio signal and inputs the audio signal into the control unit 23. Note that the image file 40 does not have to be recorded in the memory card 25 which is a portable recording medium, but may be recorded in a hard disk drive which is a recording medium, not shown in the figures, built-in in the image capturing device 10.

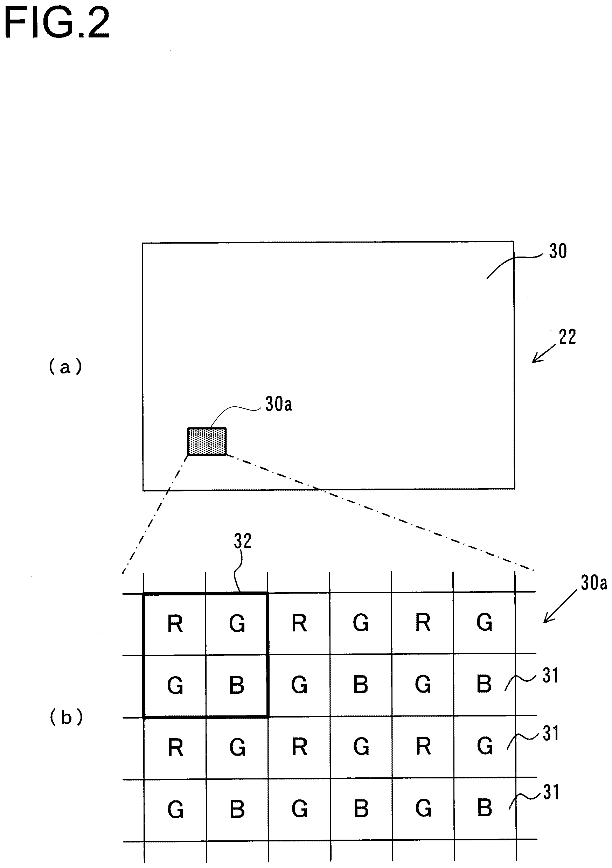

FIG. 2(a) is a plan view schematically showing an imaging surface 30 of the image sensor 22. FIG. 2(b) is a plan view showing a partial region 30a of the imaging surface 30 in an enlarged scale. As shown in FIG. 2(b), a large number of imaging pixels 31 are arranged two-dimensionally on the imaging surface 30. The imaging pixels 31 have each a color filter, not shown in the figures. The color filters are of the three types, red (R), green (G), and blue (B) filters. In FIG. 2(b), notations "R", "G", and "B" represent the types of the color filters that the imaging pixels 31 have. As shown in FIG. 2(b), the imaging pixels 31 that have color filters of these types are arranged on the imaging surface 30 of the image sensor 22 according to a so-called Bayer array.

The imaging pixels 31 that have red filters photoelectrically convert light, among the incident light, of the red wavelength range into light reception signals (i.e., photoelectrical conversion signals) and output them. Similarly, the imaging pixels 31 that have green filters photoelectrically convert light, among the incident light, of the green wavelength range into light reception signals and output them. The imaging pixels 31 that have blue filters photoelectrically convert light, among the incident light, of the blue wavelength range into light reception signals and output them.

The image sensor 22 according to this embodiment is configured so as to enable its control for each of the unit group 32 made up from the four adjacent imaging pixels 31 in a 2×2 configuration, individually. With this configuration, it is possible to perform, when charge accumulation has started in, for instance, two mutually different unit groups 32, simultaneously, for one unit group 32, reading out of the charge, i.e., reading out of the light reception signals after 1/30 second from the start of the charge accumulation, while for the other unit group 32, reading out of the charge after 1/15 second after the start of the charge accumulation. In other words, it is possible to set at the image sensor 22 different exposure times (i.e.., charge accumulation times, which are so-called shutter speeds) for each unit group 32 in a single imaging operation.

In addition to the above-described exposure time, it is also possible to set at the image sensor 22 different amplification factors of imaging signal (i.e., so-called ISO sensitivities) for different unit groups 32. The image sensor 22 can change timing at which charge accumulation is started and timing at which a light reception signal is read out for each unit group 32. That is, the image sensor 22 can change the frame rate upon image capturing a motion-image for each unit group 32.

When taken together, the image sensor 22 is configured to set exposure times, amplification factors, frame rates, and so on that are different for different unit groups 32, respectively. For instance, if a configuration is adopted in which a read out line, not shown in the figures, for reading out an imaging signal from a photoelectric conversion unit, not shown in the figures, of an imaging pixel 31 is provided at each unit group 32 such that an imaging signal can be read out from each unit group 32 independently of each other, different exposure times (shutter speeds) can be set for different unit groups 32, respectively. Also, if a configuration is adopted in which an amplification circuit, not shown in the figures, for amplifying an imaging signal generated with a photoelectrically converted charge is provided at each unit group 32 independently of each other such that the amplification factors of amplification circuits can be controlled for each amplification circuit, the amplification factors (ISO sensitivity) can be changed for each unit group 32, separately.

Note that the number of the imaging pixels 31 that constitute the unit group 32 is not limited to the above-mentioned four pixels in a 2×2 configuration. The unit group 32 may have at least one imaging pixel 31 and conversely may have more than four imaging pixels 31. The imaging conditions that can be set separately for different unit groups 32 may be those conditions other than the above-described ones. For instance, if a configuration is adopted in which the image sensor 22 is provided with a liquid crystal panel that has sections (of which one section corresponds to one unit group 32) such that they can be controlled for each unit group 32 independently of each other and such configuration is used as a neutral density filter that can be turned on/off, it is possible to control brightness (i.e.., aperture value) for each unit group 32.

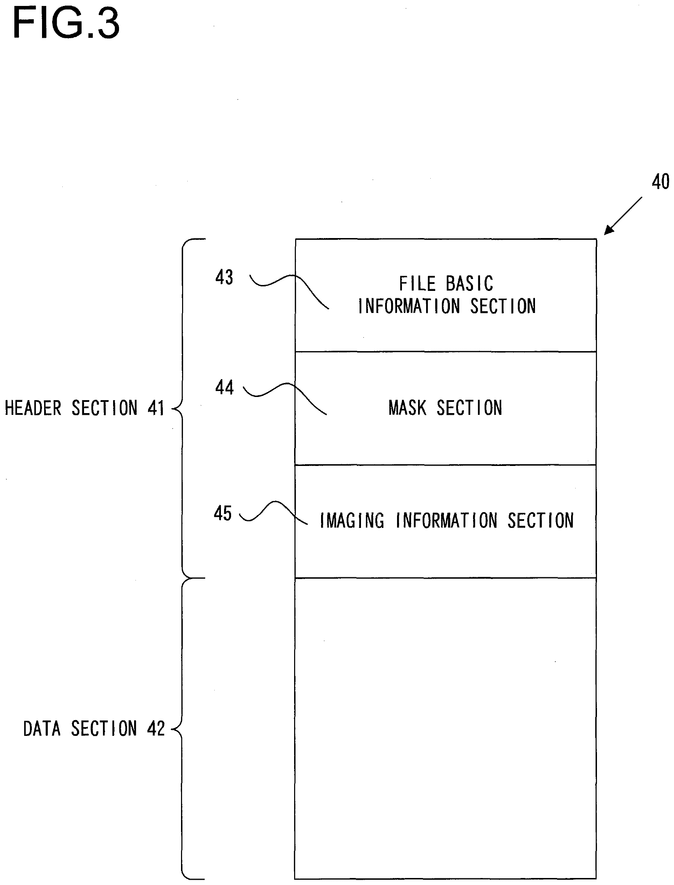

The image file 40 that is generated and recorded in the memory card 25 by the recording control section of the control unit 23 will be described below. FIG. 3 is a schematic diagram showing a configuration of the image file according to the embodiment of the present invention. The image file 40 is constituted by two blocks, i.e., a header section 41 and a data section 42.

The header section 41 is a block that is arranged on the head of the image file 40, in which file basic information section 43, a mask section 44, and an imaging information section 45 are stored in the order as described above. In the file basic information section 43, for instance, size and offset of each of the sections in the image file 40 (i.e., the header section 41, the data section 42, the mask section 44, the imaging information section 45 and so on) are recorded. In the mask section 44, imaging condition information, mask information (information relating to imaging regions) and so on, which are described later, will be recorded. In the imaging information section 45, for instance, information about image capturing, such as model name of the image capturing device 10 and information about the image capturing optical system 21 (for instance, information about the optical property, such as aberration) will be recorded. In the data section 42, which is a block placed behind the header section 41, is recorded image information, audio information, and the like.

Then, explanation is made on image capturing functions that the image capturing device 10 has and on the image file 40 that is generated (recorded) by each image capturing function. The user can perform predetermined actuation to the actuation member of the actuation unit 26 to enable switching (selecting) each image capturing function as described below. The control unit 23 performs image capturing based on the selected image capturing function to generate the image file 40 and record it in the memory card 25.

### (1) Still-image image capturing function A (Single still-image)

A still-image image capturing function A is a function to divide an image capture screen into a plurality of partial regions and set respective imaging conditions for the plurality of partial regions separately to allow image capturing of a still-image.

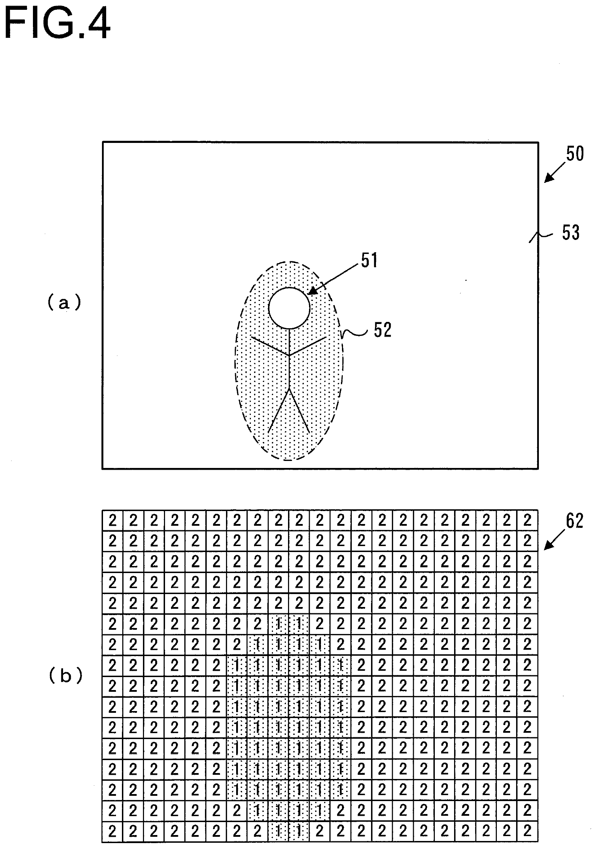

FIG. 4(a) schematically shows an image capture screen 50 (an imaging range) of the image sensor 22 and a subject 51. A procedure via which an image of the subject 51 that is shown in FIG. 4(a) is captured is explained. The control unit 23 takes an image of the subject 51 before main image capturing is performed. Hereafter, image capturing that is performed prior to main image capturing is referred to as preliminary image capturing. Note that the preliminary image capturing may also be performed as image capturing for generating a live view image (so-called through-image).

The control unit 23 executes predetermined image analysis processing on the image of the subject 51 acquired by preliminary image capturing (i.e., image in which the subject 51 comes out). The image analysis processing is a processing that detects a main subject part and a background part by using, for instance, a known subject detection technology (which is a technology that detects a range in which a predetermined subject is present by calculating an amount of characteristic). The image analysis processing achieves division of the image capture screen 50 into a main subject region 52 in which a main subject part is present and a background region 53 in which a background part is present.

Note that in FIG. 4(a), a region that roughly includes the subject 51 is shown as the main subject region 52. However, the main subject region 52 may have a shape along an outline of the subject 51. That is, the main subject region 52 may be set so as to exclude things other than the subject 51 as much as possible.

The setting section of the control unit 23 sets different imaging conditions for the unit groups 32 in the main subject region 52 and for the unit groups 32 in the background region 53. For instance, the control unit 23 may set a faster shutter speed for the former unit groups 32 than for the latter unit groups 32. With this setting, image blurring becomes difficult to occur in the main subject region 52 upon the main image capturing.

If the main subject region 52 is in a backlight state under the influence of a light source such as the sun that is present in the background region 53, the control unit 23 may set a relatively high ISO sensitivity or a relatively low shutter speed for the former unit groups 32. Also, the control unit 23 may set a relatively low ISO sensitivity or a relatively high shutter speed for the latter unit groups 32. With this setting, blocked up shadows in the main subject region 52 in a backlight state and blown out highlights of the background region 53 that receives a large amount of light can be prevented upon the main image capturing.

Note that the image analysis processing may be different from the processing that detects the above-mentioned main subject part and background part. For instance, it may be a processing that detects, among the whole image capture screen 50, a part having brightness equal to or higher than a predetermined value (too bright a part) and a part having brightness below a predetermined value (too dark a part). If the image analysis processing is such a processing, the control unit 23 may set a shutter speed and ISO sensitivity such that the unit groups 32 included in the former region can have an exposure value (Ev value) lower than that of the unit groups 32 in any other regions. On the other hand, the control unit 23 sets a shutter speed and ISO sensitivity such that the unit groups 32 included in the latter region can have an exposure value (Ev value) higher than those for the unit groups 32 included in any other regions. With this setting, the dynamic range of the image acquired by the main image capturing can be made broader than the original dynamic range of the image sensor 22.

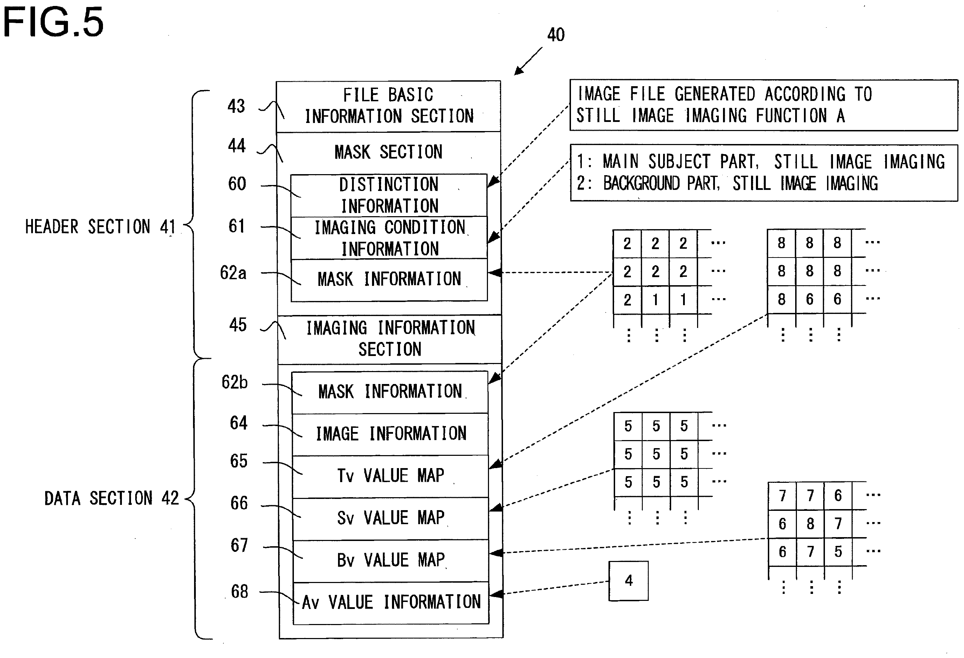

FIG. 5 is a diagram schematically showing a configuration of the image file 40 that is generated in case image capturing is performed by using the still-image image capturing function A. In the mask section 44 are recorded distinction information 60, imaging condition information 61 and mask information 62a in the above-described order. The distinction information 60 is information that indicates to the effect that this image file 40 is generated by using the still-image image capturing function A.

The imaging condition information 61 is information that indicates what uses (objects, roles) the unit groups 32 have. For instance, in case that the image capture screen 50 (FIG. 4(a)) is divided into the main subject region 52 and the background region 53 as described above, each of the unit groups 32 belongs to either the main subject region 52 or the background region 53. That is, each unit group 32 has either a use of performing "still-image image capturing of a main subject part" or a use of performing "still-image image capturing of a background part". The imaging condition information 61 is information that indicates that upon generation of this image file 40, the unit groups 32 have two types of uses, one for "still-image image capturing of a main subject part" and the other for "still-image image capturing of a background part" and that represents respective unique numbers allotted to these uses. For instance, the number 1 is allotted to the use of "still-image image capturing of a main subject part" and the number 2 is allotted to the use of "still-image image capturing of a background part".

The mask information 62a is information that represents uses (objects, roles) of the respective unit groups 32. In this embodiment, the mask information 62a is defined as information "expressed in the form of a two-dimensional map in which numbers allotted to the imaging condition information 61 are plotted in accordance with the positions of the unit groups 32". That is, when the unit groups 32 that are arranged two-dimensionally are identified by a two-dimensional coordinate (x, y) with two integers x and y, the unit group 32 that is present at the position of (x, y) has a use that is expressed by the number that is present at the position of (x, y) of the mask information 62a. For instance, when the number "1" is found to be present at the position of coordinate (3, 5) of the mask information 62a, it is found that the unit group 32 arranged at the coordinate (3, 5) is given a use of "still-image image capturing of a main subject part". In other words, it is found that the unit group 32 arranged at the coordinate (3, 5) belongs to the main subject region 52.

An example of the mask information 62a that corresponds to the image capture screen 50 as shown in FIG. 4(a) is shown in FIG. 4(b). At the positions of the unit groups 32 that belong to the main subject region 52, "1" is stored. Also, at the positions of the unit groups 32 that belong to the background region 53, "2" is stored.

In the data section 42 are stored mask information 62b, image information 64, a Tv value map 65, a Sv value map 66, a Bv value map 67, and an Av value information 68 in the above-described order. The mask information 62b is the same information as the mask information 62a that is stored in the mask section 44. Here, the reason that the same mask information 62a, 62b is stored in both the mask section 44 and the data section 42 is to make it easy to handle the image file 40.

Although details is described later, pieces of mask information 62a, 62b that are different from each other may be stored in the mask section 44 and in the data section 42, respectively, in the case of the image file 40 that is generated by another function. If, for instance, the mask information 62b is stored in the data section 42 and no mask information 62a is stored in the mask section 44 in the still-image image capturing function A, the structure of the image file 40 changes depending on the functions. This configuration makes it cumbersome and complicated to handle the image file 40. Accordingly, in this embodiment, the same pieces of mask information 62a, 62b are stored in both the mask section 44 and the data section 42 purposely to minimize a difference in structure of the image file 40 for each of the functions. Note that either one of pieces of the mask information 62a, 62b may be omitted. If omitted, the size of the storage region occupied by the image file 40 can be reduced. Even if both the pieces of mask information 62a, 62b are recorded, it can be determined whether it is necessary to read in both the pieces of mask information 62a, 62b based on distinction information. Thus, if it is determined that one of them is unnecessary for a reproduction process and so on, then reading in of such one may be skipped to shorten file read-in time.

Note that in the explanation below, the mask information 62a that is stored in the mask section 44 and the mask information 62b that is stored in the data section 42 are collectively called mask information 62.

The image information 64 is information that is generated by recording imaging signals that are output from the image sensor 22 upon main image capturing before they are subjected to various types of image processing. This information is so-called RAW image data. The Tv value map 65 is information that is expressed in the form of a two-dimensional map generated by plotting Tv values representing shutter speeds that are set for respective unit groups 32 in accordance with the positions of the unit groups 32. For instance, the shutter speed that is set for the unit group 32 arranged at the coordinate (x, y) can be determined by checking the Tv value stored at the coordinate (x, y) in the Tv value map 65.

The Sv value map 66 is information that is expressed in the form of a two-dimensional map generated by plotting Sv value representing ISO sensitivity that is set for each of the unit groups 32 in the same manner as that in the case of the Tv value map 65. The Bv value map 67 is information that is expressed in the form of a two-dimensional map generated by plotting luminance of the subject that is measured for each of the unit groups 32 upon main image capturing. That is, it is information that is expressed in the same form as the Tv value map 65 by plotting Bv values representing luminance of subject light incident in each of the unit groups 32. The Av value information 68 is information that represents aperture value upon main image capturing. In this embodiment, Av values, which are different from the Tv values, the Sv values, and the Bv values, are not present for each of the unit groups 32 separately. Therefore, unlike the Tv value, Sv value, and Bv value, only a single value is stored for the Av value, so that it is different from the information that is formed by two-dimensionally mapping a plurality of values.

As described above, the recording control section of the control unit 23 performs image capturing by using the still-image image capturing function A and thereby records in the memory card 25 the image file 40 in which the image information 64 that is generated by the image sensor 22 capable of setting respective imaging conditions for the unit groups 32 are correlated with data relating to the respective imaging conditions for the unit groups 32 (i.e., the imaging condition information 61, the mask information 62, the Tv value map 65, the Sv value map 66, and the Bv value map 67 and so on). This mode of recording image files is referred to as a "batch storage mode (time series type)" in the description.

Note that in the above explanation, the image information 64 is explained as being RAW image data. However, it need not be RAW image data but may be compressed (developed) image data.

### (2) Motion-image image capturing function A (single motion-image)

The motion-image image capturing function A is a function according to which the image capture screen is separated into a plurality of partial regions and imaging conditions are set therefor individually to perform imaging of a motion-image. The motion-image image capturing function A differs from the still-image image capturing function A in that the former performs image capturing of a motion-image but not a still-image. To perform image capturing of a motion-image instead of a still-image, there is the possibility that "uses of respective unit groups 32" described regarding the still-image image capturing function A may be changed frame by frame.

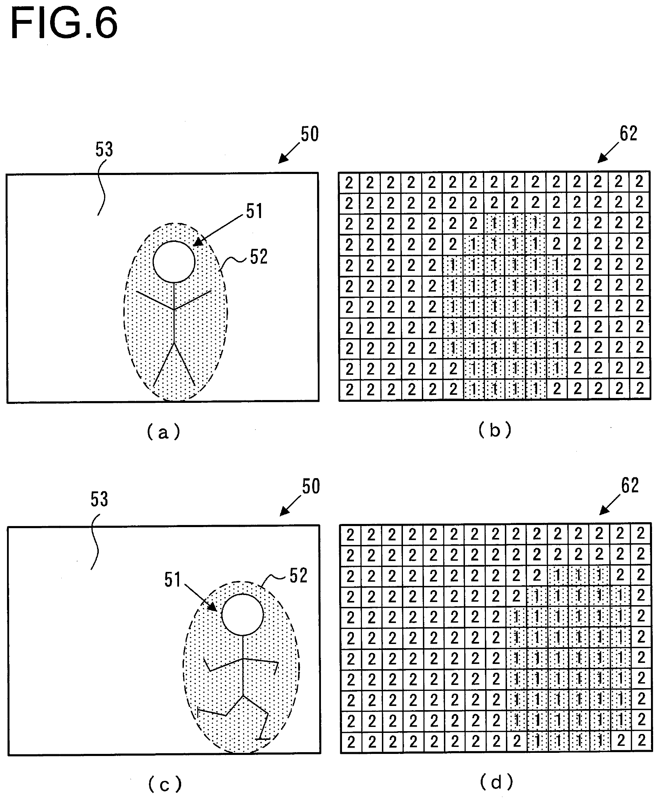

FIG. 6(a) schematically shows the image capture screen 50 (imaging range) of the image sensor 22 and the subject 51. The control unit 23 performs preliminary image capturing prior to main image capturing. Then, the control unit 23 executes predetermined image analysis processes on the image of the subject 51 (image in which the subject 51 comes out) acquired by the preliminary image capturing. By the image analysis processes, the image capture screen 50 is divided into a main subject region 52 in which a main subject part is present and a background region 53 in which a background part is present. The generation section of the control unit 23 sets imaging conditions different from each other for the unit groups 32 in the main subject region 52 and for the unit groups 32 in the background region 53 and performs main image capturing for a first frame to generate image data. An example of mask information 62 in this case is shown in FIG. 6(b). In the mask information 62 shown in FIG. 6(b), for example, the number "1" is allotted to the unit groups 32 belonging to the main subject region 52 and the number "2" is allotted to the unit groups 32 belonging to the background region 53.

Then, the control unit 23 performs image analysis processes on the first frame image data to detect a main subject part and a background part. As a result, the first frame image data is divided into the main subject region 52 and the background region 53 as shown in FIG. 6(c). The setting section of the control unit 23 sets mutually different imaging conditions for the unit groups 32 in the main subject region 52 and for the unit groups 32 in the background region 53 and performs main image capturing for a second frame to generate image data. An example of the mask information 62 in this case is shown in FIG. 6(d).

Comparing the mask information 62 (FIG. 6(b)) corresponding to the result of the preliminary image capturing with the mask information 62 (FIG. 6(d)) corresponding to the result of the first frame main image capturing, these two pieces of mask information 62 may sometimes have contents different from each other in case, for instance, the subject 51 is moving or the user moves the image capturing device 10 because imaging is performed at different times (i.e., because of presence of time lag). In other words, the mask information 62 is dynamic information that varies with lapse of time. Therefore, in some of the unit groups 32, imaging conditions that are different from each other will be set at the times of the first frame main image capturing and the second frame main image capturing.

The recording control section of the control unit 23 records, in the image file 40, the mask information 62b, the Tv value map 65, the Sv value map 66, the Bv value map 67, and the Av value information 68 for each frame as well as the image information 64 for each frame. Therefore, after image capturing, all the information upon image capturing can be acquired from the image file 40 and utilized effectively in reproduction of motion-images.

Note that the processes upon third and subsequent frames main image capturing are the same as the processes for the second frame and explanation thereof will be omitted here. The control unit 23 repeatedly perform the above-mentioned processes until image capturing is completed (for instance, until a predetermined time is elapsed or until the user performs a predetermined imaging termination actuation).

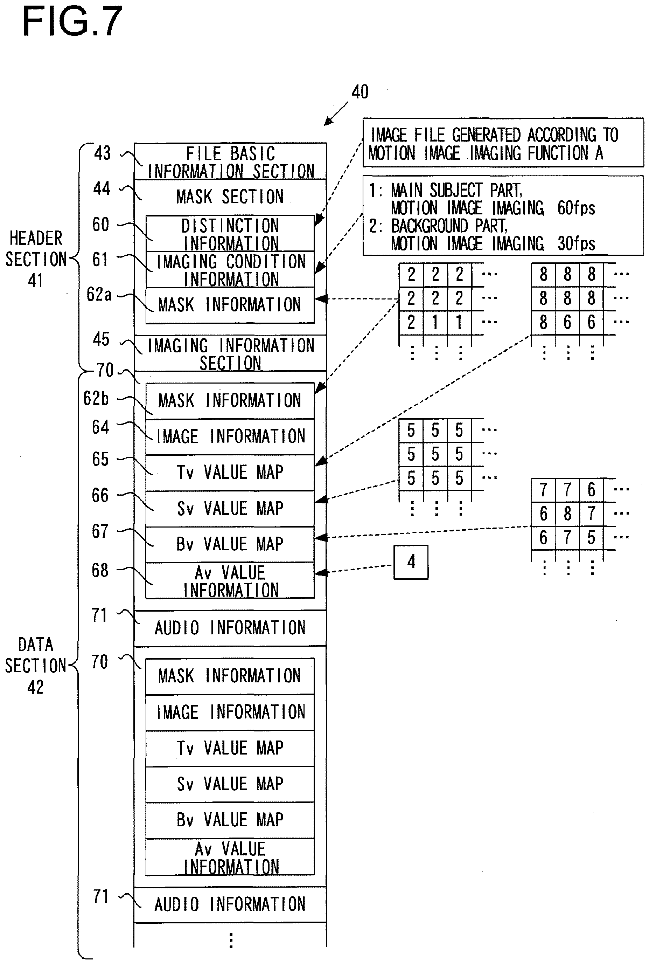

FIG. 7 is a diagram schematically showing a configuration of the image file 40 that is generated when image capturing is performed by using the motion-image image capturing function A. Hereafter, differences from image capturing by using the still-image image capturing function A as shown in FIG. 5 will be described in detail.

The distinction information 60 indicates that the image file 40 is generated by using the motion-image image capturing function A. The imaging condition information 61 corresponds to the imaging condition information 61 upon imaging by using the still-image image capturing function A plus a frame rate. That is, the imaging condition information 61 is information that indicates that upon generation of the image file 40, the unit groups 32 have two types of uses, for instance, one for performing "motion-image image capturing of a main subject part at 60fps" and the other for performing "motion-image image capturing of a background part at 30fps" and that represents unique numbers allotted to the respective uses. For instance, the number "1" is allotted to the use of performing "motion-image image capturing of a main subject part at 60fps" and the number "2" is allotted to the use of performing "motion-image image capturing of a background part at 30fps".

The mask information 62a is information similar to that upon image capturing by using the above-mentioned still-image image capturing function A. However, upon the motion-image image capturing, the mask information 62, which is dynamic information that varies frame by frame, need be determined as to which frame is to be selected for recording its mask information 62 in the header section 41. In this embodiment, the mask information 62a representing respective imaging conditions that are set for the unit groups 32 at the first frame image capturing, that is, the mask information 62 that is shown as an example in FIG. 6(b) are recorded in the header section 41. This configuration is adopted to prevent handling of the image file 40 from becoming cumbersome and complicated as described in the explanation of the still-image image capturing function A.

In the data section 42, a block 70 for one frame quota is stored for each frame in the order of image capturing. A single block 70 includes the mask information 62, the image information 64, the Tv value map 65, the Sv value map 66, the Bv value map 67, and the Av value information 68. In the data section 42, audio information 71 is stored together with the respective blocks 70 for the frames. To enable easy motion-image reproduction, the audio information 71 is divided into a plurality of pieces of information each containing information for one frame quota, each of which pieces is multiplexed with a corresponding block 70 before the divided and multiplexed pieces of information can be stored in the data section 42. Note that multiplexing of the audio information 71 may be performed for every predetermined number of frame quotas instead of one frame quota. Each of the pieces of information in the block 70 is recorded frame by frame. Except for this, the image capturing by using the motion-image image capturing A is the same as the image capturing by using the still-image image capturing function A and further explanation is omitted.

Note that the image file 40 is not limited to the one in which the mask information 62b for each frame is recorded as well as the image information 64 for each frame. If the same image capturing scene lasts continuously as in the case of, for example, motion-image image capturing with a monitoring camera, the mask information 62 of the initial frame is used until a change in the image capturing scene, i.e., a change in the mask information 62, occurs. In this case, the recording control section of the control unit 23 records the mask information 62a, which is set for image capturing for the first frame, at the header section 41. If the mask information 62, which is set for image capturing for the second frame, is the same as the mask information 62a for the first frame, the recording control section of the control unit 23 records no mask information 62b at the block 70 for the second frame in the data section 42 and adds thereto information indicating that the mask information 62b is absent (mask existence information). For example, if the number "1" is added as the mask existence information, it indicates that mask the information 62b is recorded at the data section 42. On the other hand, if the number "0" is added as the mask existence information, it indicates that no mask information 62b is recorded at the data section 42. In other words, "0" is added as the mask existence information at the block 70 of the second frame above.

Also, for subsequent frames, if a frame has an image-captured scene which is the same as that of the first frame, no mask information 62b is recorded at each block 70 of the data section 42 and "0" is added as the above described mask existence information. If the image-captured scene has changed from the scene that is captured for the first frame, the recording control unit of the control unit 23 adds "1" as the mask existence information to the block 70 for the frame concerned in the data section 42 and records the mask information 62b that is set according to the change in the scene. This enables, if the same image-captured scene lasts continuously, a reduction of the mask information at the data section 42 to reduce the size of the storage region.

If the image-captured scene is the same as that in the preceding frame, the preceding mask information 62 may be used. In this case, the recording control section of the control unit 23 records, at the header section 41, the mask information 62a that has been set at the time of image capturing for the first frame. If the mask information 62 that has been set at the time of image capturing for the second frame is the same as the mask information 62a for the first frame, the recording control unit of the control unit 23 records no mask information 62b at the block 70 of the second frame in the data section 42 and adds information indicating that the mask information 62b is the same as the mask information 62a for the preceding frame (mask identical information). If the number, for example, "1", is added as the mask identical information, it indicates that the image capturing scene for this frame differs from that for the preceding frame and the mask information 62b is recorded at the data section 42. If the number "0" is added as the mask identical information, it indicates that the image capturing scene for this frame is the same as the image capturing scene for the preceding frame and no mask information 62b is added at the data section 42. That is, "0" is added as the mask identical information at the block 70 of the second frame.

If the image-captured scene for the third frame is different from that for the second frame, the recording control unit of the control unit 23 sets the mask information 62 for the third frame, adds "1" as the mask identical information, and records the mask information 62b at the block 70 of the third frame in the data section 42. For subsequent frames, the recording control section of the control unit 23, if the image-captured scene for a frame differs from that for the preceding frame, adds "1" as the mask identical information to the block 70 of that frame and records the mask information 62b thereat. If the image-captured scene for a frame is the same as that for the preceding frame, the recording control unit of the control unit 23 adds "0" as the mask identical information to the block 70 of that frame and records no mask information 62b thereat. This enables, when the same image-captured scene lasts continuously, a reduction in the mask information 62b and thus a reduction in size of the memory region.

As described above, the recording control section of the control unit 23 performs image capture by using the motion-image image capturing function A and records, at the memory card 25, the image file 40 in which the image information 64 that is generated by the image sensor 22 that is capable of setting imaging conditions for each of the unit groups 32is correlated with data relating to imaging conditions (the imaging condition information 61, the mask information 62, the Tv value map 65, the Sv value map 66, and the Bv value map 67 and so on) for each of the unit groups 32. This mode of recording image files is referred to as a "batch storage mode (time series type)" in the description.

### (3) Still-image image capturing function B (a plurality of still-images)

The still-image image capturing function B is a function of simultaneously image capturing a plurality of still-images relating to the same subject under imaging conditions differing from each other by single image capturing operation.

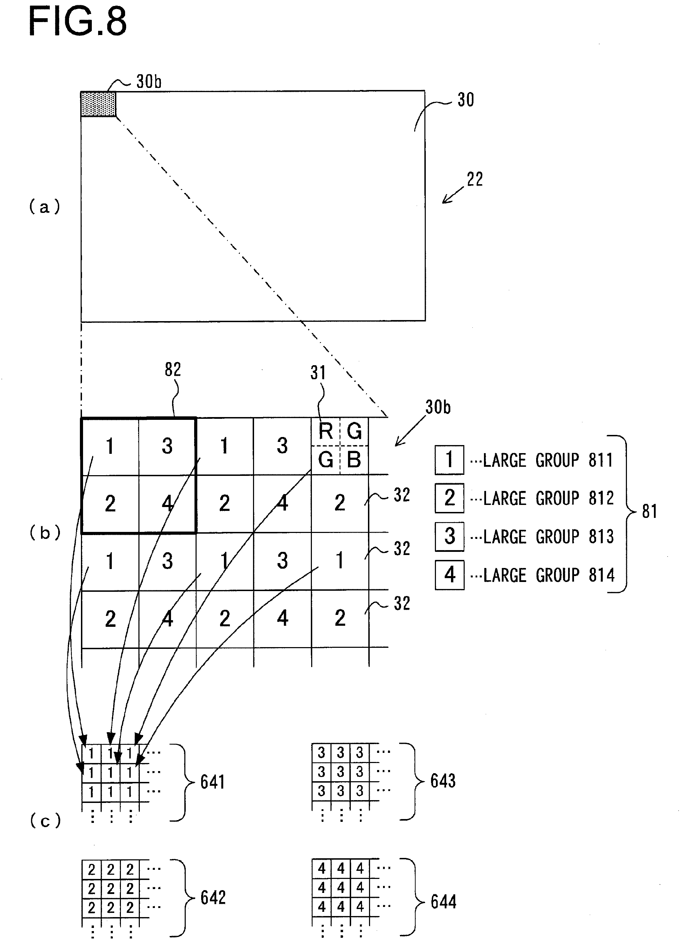

FIG. 8(a) schematically shows an imaging surface 30 of the image sensor 22. On the other hand, FIG. 8(b) is a schematic diagram showing a partial region 30b of the imaging surface 30 in an enlarged view. In the case of the still-image image capturing function B, a plurality of unit groups 32 arranged in a two-dimensional array are further classified into a plurality of large groups 81. On this occasion, the unit groups 32 are classified such that unit groups 32 that belong to any one of the large groups 81 are arranged uniformly over all the imaging surface 80. For instance, in FIG. 8(b), all the unit groups 32 are divided into blocks 82, each of which includes4 unit groups 32 arranged in a 2×2 configuration; in each block 82, the upper left unit group 32 is classified into a first large group 811, the lower left unit group 32 is classified into a second large group 812, the upper right unit group 32 is classified into a third large group 813, and the lower right unit group 32 is classified into a fourth large group 814. Note that in FIG. 8(b), one schematically shown square represents a single unit group 32. The number described in the square represents the kind of the large group 81 to which that unit group 32 belongs.

Upon main image capturing, the control unit 23 sets respective imaging conditions that differ from each other for the unit groups 32 that belong to the first large group 811, the unit groups 32 that belong to the second large group 812, the unit groups 32 that belong to the third large group 813, and the unit groups 32 that belong to the fourth large group 814. For instance, the control unit 23 performs main image capturing with the shutter speed and ISO sensitivity set to values differing from each other. The recording control section of the control unit 23 records the image information acquired by performing image capturing in this manner in the image file 40. Here, the recorded image information is intended such that each pixel value is put together for each of the large groups 81 for further use as schematically shown in FIG. 8(c).

For instance, as shown in FIG. 8(c), when only those pixel values that correspond to the unit groups 32 belonging to the first large group 811 are extracted from the image information 64 and arranged in a two-dimensional array, first image information 641 consisting of a number of pixel values, which number is 1/4 times the number of pixels of the image sensor 22, is obtained. Similarly, when only those pixel values that correspond to the unit group 32 belonging to the second large group 81 are extracted from the image information 64 and arranged in a two-dimensional array, second image information 642 is obtained, which consists of a number of pixel values, which number is 1/4 times the number of pixels of the image sensor 22 and in which the same subject 51 as that in the first image information 641 whose image has been captured under imaging conditions different from the above-mentioned first image information 641 comes out. Similarly, third image information 643 and fourth image information 644 are obtained. These four pieces of image information 641, 642, 643, and 644 are images obtained by image capturing the same subject 51 under imaging conditions differing from each other. That is, as mentioned first, a single imaging operation achieves simultaneous imaging of four still-images regarding the same subject 51 under imaging conditions differing from each other.

Note that the image information 64 in the image file 40 is an image obtained by arranging pixels output from respective imaging pixels 31 just according to the positions of the imaging pixels 31. That is, the processes for generating the above-mentioned four pieces of image information 641, 642, 643, and 644 are performed upon reproduction in which the image file 40 is read out from the memory card 25 or upon development. Furthermore, the image information 64 is not necessarily intended to be used only for generating the four pieces of image information 641, 642, 643, and 644. If the image information 64 is used (reproduced, etc.) as it is, without generation of a plurality of pieces of divided information, then, for instance, a checkerboard pattern comes out in the resultant image to make the image unnatural due to imaging conditions that differ from each of the adjacent unit groups 32, respectively. However, since respective imaging conditions (for instance, Tv value, Sv value, etc.) for each of the unit groups 32 are recorded in the image file 40, development by combining such imaging conditions with the image information 64 enables generation of such unnatural images to be prevented. For instance, for the unit groups 32 that have an exposure value (Ev value) higher than other unit groups 32, development may be performed at a luminance that is lower than other unit groups 32.

The example in which the unit groups 32 are classified into four large groups 811, 812, 813, and 814 has been explained above. However, the way of classifying the unit groups 32 is not limited to four large groups but the unit groups 32 may be classified into any desired number of large groups 81 to enable simultaneous image capturing of any desired number of still-images. Furthermore, the layout of large groups 81 (method of classifying the unit groups 32) is not limited to classifying the unit groups 32 in a 2×2 configuration into different large groups 81, respectively, one by one.

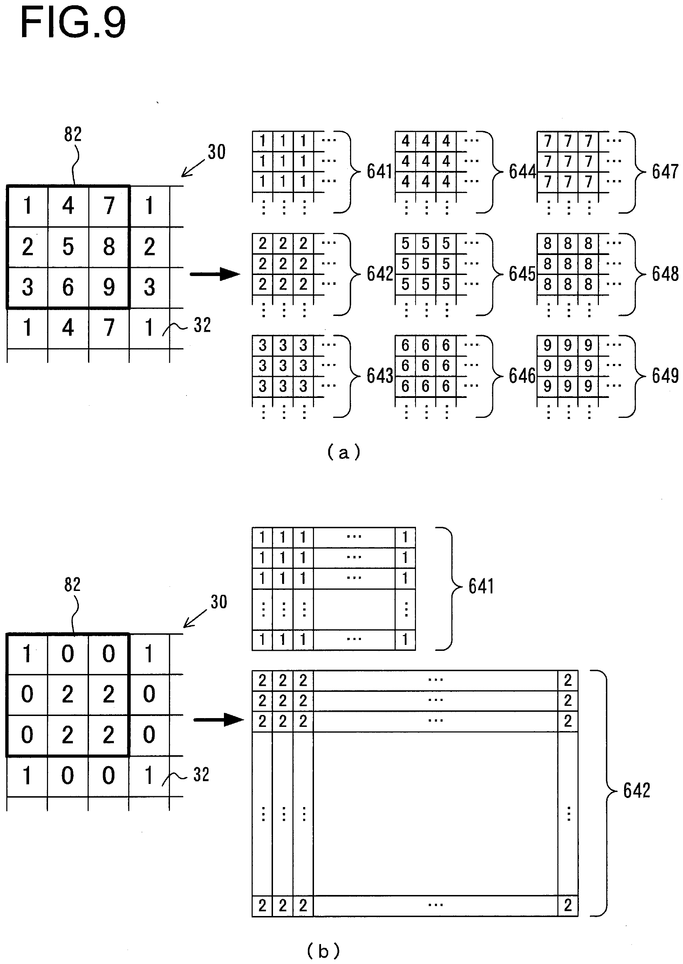

In this regard, some examples are shown in FIGS. 9(a), and 9(b). In FIG. 9(a), all the unit groups 32 are separated into any of sets including nine unit groups in a 3×3 configuration and nine unit groups 32 included in each of the sets are allotted to first to ninth large groups 81, respectively. By adopting this layout, simultaneous image capturing of nine images 641 to 649 under mutually different imaging conditions can be achieved by a single imaging operation. On the other hand, in FIG. 9(b), all the unit groups 32 are separated any of sets including nine unit groups in a 3×3 configuration and in each of the sets, the unit group 32 at the upper left corner is allotted to the first large group 81, and four unit groups 32 in a 2×2 configuration at the lower right are allotted to the second large group 81. In this layout, the rest four unit groups 32 are not used in image capturing. With this configuration, a single image capturing operation enables simultaneous imaging of two images 641, 642 under different imaging conditions, with the image 642 corresponding to the second large group 81 having a pixel number that is 4 times as large as the image 641 corresponding to the first large group 81. That is, a single imaging operation enables simultaneous imaging of two images 641, 642 under different imaging conditions, with the two images 641, 642 having mutually different pixel numbers.

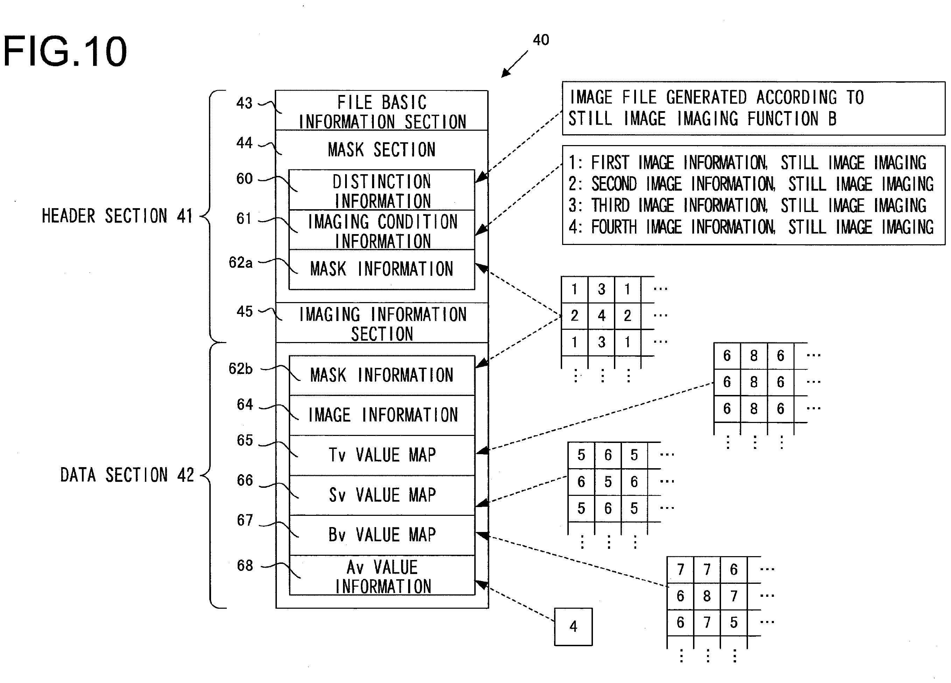

FIG. 10 is a diagram schematically showing a configuration of the image file 40 that is generated upon imaging by using the still-image image capturing function B. Hereafter, differences of the still-image image capturing function B from the still-image image capturing function A will be described in detail.

The distinction information 60 indicates that the image file 40 is generated by using the still-image image capturing function B. The imaging condition information 61 is information that indicates which use the unit group 32 has. In the case of the still-image image capturing function B, each unit group 32 has any one of uses, for instance, a use of "configuring the first image information 641", a use of "configuring the second image information 642", a use of "configuring the third image information 643", and a use of "configuring the fourth image information 644". The imaging condition information 61 is information that indicates that upon generating this image file 40, these four kinds of uses are present in the unit groups 32 and that represents unique numbers allotted to the respective uses. For instance, numbers 1 to 4 are allotted to uses of "configuring first to fourth image information 641 to 644", respectively.

In the case of the still-image image capturing function B, the mask information 62a is information represents a use of each of the unit groups 32 in the same manner as that in the case of the still-image image capturing function A. That is, the mask information 62a is "information expressed in the form of a two-dimensional map that is generated by plotting the numbers allotted to the imaging condition information 61 in accordance with the position of each unit group 32". For instance, when the number "1" is present at the coordinate (3, 5) of the mask information 62a, the unit group 32 at the coordinate (3, 5) belongs to the first large group 811, that is, constitutes the first image information 641.

Note that in this embodiment, the large group 81 that has a number of "0" is a special large group 81 that represents a unit group 32 that is not used in image capturing. That is, in the mask information 62a the unit groups 32 to which the number "0" is allotted are not used in image capturing (i.e., no imaging signal is read out upon main image capturing) and no information about the unit groups 32 is included in the image information 64 that is recorded in the data section 42 (or dummy information which is invalid is recorded as the information relating to the unit groups 32).

For instance, in case that simultaneous image capturing under three kinds of different imaging conditions is sufficient and simultaneous image capturing under four kinds of different imaging conditions is unnecessary, the number "0" will be allotted to the mask information 62a of the unit groups 32 to which "4" is allotted among the unit groups 32 shown in FIG. 8(b).

The structure of the data section 42 is the same as that of the data section 42 in image capturing by using the still-image image capturing function A. That is, in the data section 42 are stored the mask information 62b, the image information 64, the Tv value map 65, the Sv value map 66, the Bv value map 67, and the Av value information 68. The mask information 62b is the same information as the mask information 62a that is stored in the mask section 44.

Note that information that represents validity/invalidity of each of the unit groups 32 may be stored as the mask information 62b instead of the information that is the same as the mask information 62a of the mask section 44. For instance, a map generated by allotting a numerical value of "0" to the unit groups 32 that are not used in image capturing (i.e., from which no imaging signal is read out upon image capturing) and a numerical value of "1" to the unit groups 32 that are used in image capturing (i.e., from which an imaging signal is read out upon image capturing) and arranging these numerical values in the form of a two-dimensional array may be stored in the data section 42 as the mask information 62b. The same is true for image capturing by using a motion-image image capturing function B or a mixed image capturing function as described later.

As described above, the image capture is performed by using the still-image image capturing function B, and the recording control section of the control unit 23 records, at the memory card 25, the image file 40 in which the image information 64 generated by the image sensor 22 that is capable of setting imaging conditions for each of the unit groups 32 is correlated with data relating to the imaging conditions (the imaging condition information 61, the mask information 62, the Tv value map 65, the Sv value map 66, the Bv value map 67, etc.) for each of the unit groups 32. This mode of recording image files is referred to as a "batch storage mode (image set type)" in the description.

### (4) Motion-image image capturing function B (a plurality of motion-images)

The motion-image image capturing function B is a function that performs simultaneous imaging of motion-images relating to the same subject by a single imaging operation under mutually different imaging conditions. The motion-image image capturing function B differs from the still-image image capturing function B in that according to the former, motion-images are captured instead of still-images. Although the motion-image image capturing function B is a function of capturing motion-images, some unit groups 32 that are classified into a certain large group 81 are not classified into different large groups 81 frame by frame as in the motion-image image capturing function A. However, depending on the setting of frame rates, it may happen that the unit group 32 that is included in one frame (i.e., that is valid in one frame) is not included in another frame (i.e., is invalid in another frame). Hereafter, the motion-image image capturing function B will be explained based on the setting of frame rate.

### (4-1) When frame rates are unified in all the large groups 81

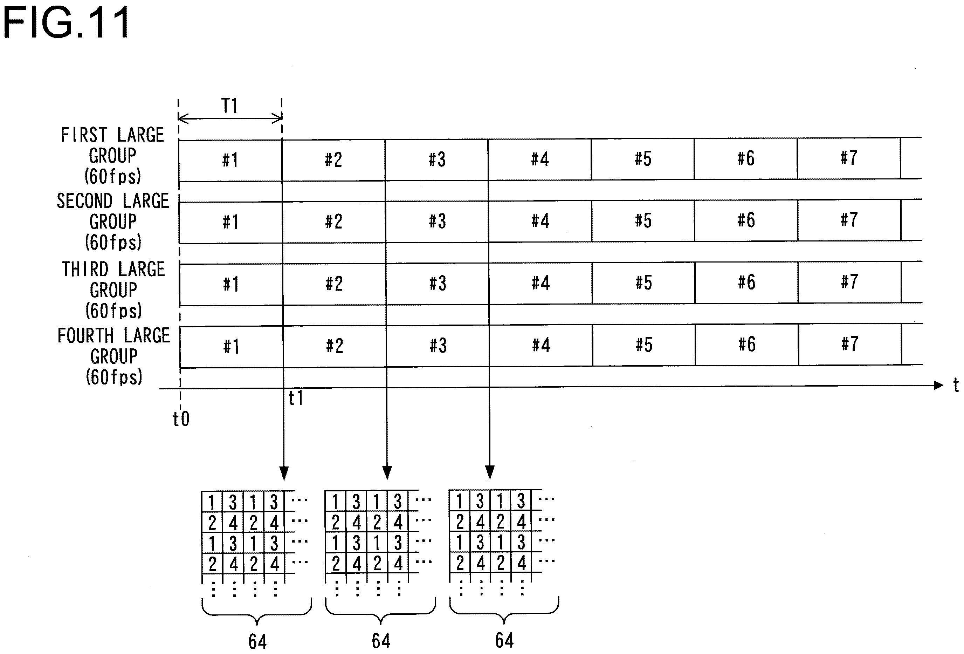

FIG. 11 is an illustrative diagram of the motion-image image capturing function B when frame rates are the same in all the large groups 81. In this case, the imaging conditions that differ for each of the large groups 81 means imaging conditions other than frame rate (for instance, shutter speed, ISO sensitivity, etc.). Even if the exposure time is different for each of the large groups 81, the frame rate, i.e., the period at which signals are read out, is the same. Hence in all the large groups 81, reading out of imaging signals is performed at a predetermined cycle T1 that corresponds to the frame rate.

Since imaging is performed at the same frame rate in all the unit groups 32, all the unit groups 32 are used in image capturing for all the frames. In other words, in all the frames, an imaging signal is read out from all the unit groups 32 and the imaging signals that are read out from all the unit groups 32 are included in pieces of the image information 64 of all the frames, respectively. For instance, first image information 64 is generated at time t1, which is by a predetermined period T1 later than an image capturing start time t0. The image information 64 includes an image of a first frame in the first large group 81 (i.e., the frame indicated with #1 in FIG. 11, hereafter, the same), an image of the first frame in the second large group 81, an image of the first frame in the third large group 81, and an image of the first frame in the fourth large group 81. The same is true for the second and subsequent pieces of image information 64.

### (4-2) When frame rates are not unified for each of large groups 81

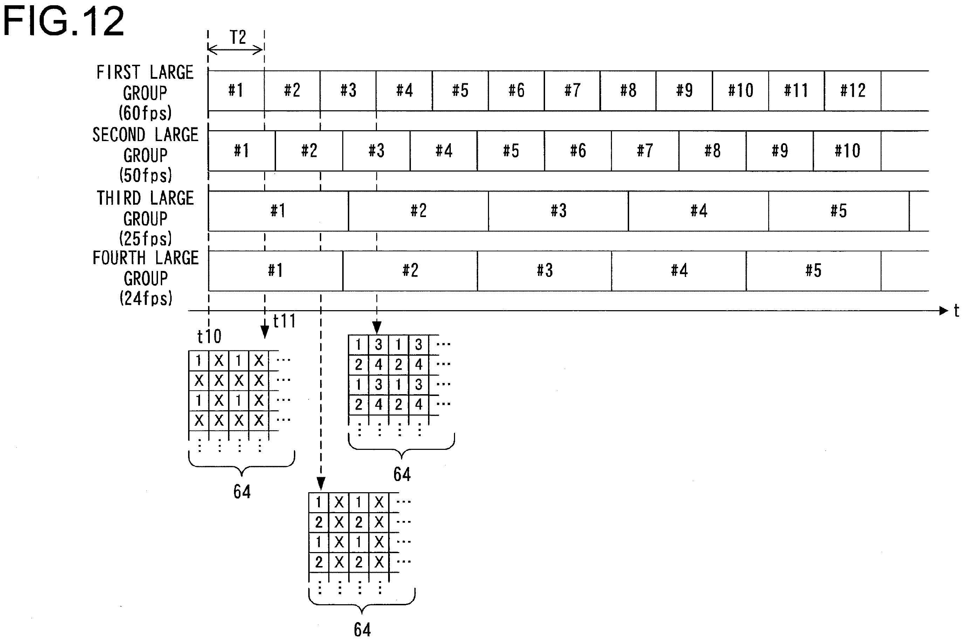

FIG. 12 is an illustrative diagram of the motion-image image capturing function B when mutually different frame rates are set in all the large groups 81. In this example, a frame rate of 60fps is set for the first large group 811, a frame rate of 50fps is set for the second large group 812, a frame rate of 24fps is set for the third large group 813, and a frame rate of 25fps is set for the fourth large group 814.

When the large groups 81 have mutually different frame rates, the recording control section of the control unit 23 records each frame based on the fastest frame rate as a standard. That is, the image information 64 is recorded at a predetermined cycle T2 (16.7 milliseconds) corresponding to 60fps. For instance, at time t11, which is by a predetermined period T2 later than the imaging start time t0, the image information 64 is generated based on imaging signals that are read out from the unit groups 32 belonging to the first large group 811 and stored in the image file 40. At time t11, no imaging signal is read out from the first frames in other large groups 812, 813, and 814, so that the image information 64 does not include such imaging signals. Note that in FIG. 12, a symbol "X" indicates that no imaging signal is read out from a specified unit group 32 and the image information 64 does not include such an imaging signal.

At time t12, which is by a predetermined period T2 later than time t11, not only the second (i.e., the second frame) main image capturing of the first large group 811 but also the first (i.e., the first frame) main image capturing of the second large group 812 (50fps) has been completed. Then, the recording control section of the control unit 23 reads out imaging signals from the unit groups 32 belonging to the first large group 811 and image signals from the unit groups 32 belonging to the second large group 812 and records the read out imaging signals at the image file 40. It reads out no imaging signal from the unit groups 32 belonging to the third large group 813 and the unit groups 32 belonging to the fourth large group 814, so that it records no imaging signal in the image file 40.

As described above, when the large groups 81 have mutually different frame rates, a part of the image information 64 may sometimes be missing (invalid). The recording control section of the control unit 23 uses the mask information 62b that is recorded for each frame to indicate that no imaging signal that corresponds to the specified unit group 32 is included in the image information 64. Specific structure of the mask information 62b will be described hereinbelow.

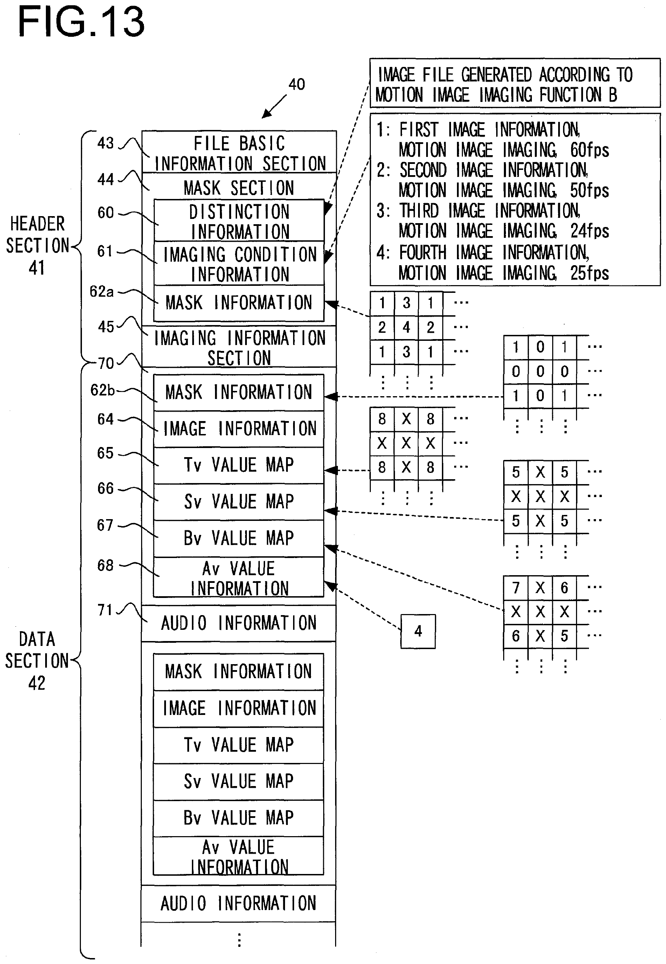

FIG. 13 is a diagram schematically showing the structure of the image file 40 that is generated upon image capturing by using the motion-image image capturing function B. Hereafter, differences of the motion-image image capturing function B from the motion-image image capturing function A as shown in FIG. 7 and the still-image image capturing function B as shown in FIG. 10 are described in detail.

The distinction information 60 indicates that the image file 40 is generated by using the motion-image image capturing function B. The imaging condition information 61 is information as to which uses the unit groups 32 have. The imaging condition information 61 in the motion-image image capturing function B corresponds to information obtained by adding frame rate to the imaging condition information 61 in the still-image image capturing function B. That is, the imaging condition information 61 is information that indicates that upon generating the image file 40, the unit groups 32 have, for instance, four kinds of uses, i.e., a use of "configuring the first image information 641 which is a motion-image at 60fps", a use of "configuring the second image information 642, which is a motion-image at 50fps", a use of "configuring the third image information 643, which is a motion-image at 24fps", and a use of "configuring the fourth image information 644, which is a motion-image at 25fps" and that represents unique numbers allotted to these uses. For instance, the numbers 1 to 4 are allotted to the uses of "configuring the first to the fourth pieces of image information 641 to 644", respectively.

The mask information 62a in the motion-image image capturing function B is information that represents respective uses of the unit groups 32 in the same manner as that in the still-image image capturing function B. That is, the mask information 62a is "information expressed in the form of a two-dimensional map generated by plotting numbers allotted to the imaging condition information 61 in accordance with the positions of the respective unit groups 32". For instance, when the number "1" is present at the coordinate (3, 5) of the mask information 62a, it is determined that the unit group 32 at the coordinate (3, 5) belongs to the first large group 811, that is, it constitutes the first image information 641.

The configuration of the data section 42 is the same as the motion-image image capturing function A. That is, in the data section 42, the block 70 of one frame quota is stored for each frame. One block 70 includes mask information 62b, image information 64, a Tv value map 65, a Sv value map 66, a Bv value map 67, and Av value information 68. Furthermore, in the data section 42, audio information 71 together with the block 70 for each frame is stored.

It is sometimes the case that in the mask information 62b, not only the number identified based on the imaging condition information 61 described above (for instance, 1 to 4) but also the number "0" may be stored. The number "0" indicates that the unit group 32 is not used in imaging in the corresponding frame (i.e., upon imaging no imaging signal is read out). As described above, it is sometimes the case that when imaging a plurality of motion-images having frame rates differing from each other, no imaging signal that corresponds to a specific unit group 32 is stored in the image information 64 of some frame. In such a case, the control unit 23 sets the numerical value of the mask information 62 that corresponds to the specific unit group 32 to "0". Here, in the unit group 32 the numerical value of the mask information 62b is set to "0", no valid values are recorded for information other than the image information 64, i.e., the Tv value in the Tv value map 65, the Sv value in the Sv value map 66, and the Sv value in the Bv value map 67.

Note that in the unit group 32 for which the numerical value of the mask information 62b is set to "0", a configuration may be adopted in which the imaging signal in a preceding frame of the unit group 32 is recorded in the image information 64. Also, the values of a preceding frame may be recorded regarding the Tv value in the Tv value map 65, the Sv value in the Sv value map 66, and the Sv value in the Bv value map 67.

Even when the large groups 81 have mutually different frame rates as described in (4-2) above, no mask information 62b need be recorded at the data section 42. For example, even when the frame rates are set such that 60fps is set for the first large group 811, 50fps is set for the second large group 812, 24fps is set for the third large group 813, and 25fps is set for the fourth large group 814 as described above, image signals can be read out from all the unit groups 32 that constitute the large group 81 at a predetermined frequency. In other words, a frame in which "0" is not stored as the mask information in any of the unit groups 32 regularly appears at a predetermined frequency. The recording control section of the control unit 23 generates information that indicates this regularity and records it at the header section 41 but records no mask information 62b at the data section 42. In this case, the recording control section of the control unit 23 is only required to record, at the header section 41, information indicating as illustrated in, for example, FIG. 12 that the large group 811 is valid and the large groups 812 to 814 are invalid for the first frame, that the large groups 811 and 812 are valid and the large groups 813 and 814 are invalid for the second frame, and that the large groups 811 to 814 are valid as the information that indicates the regularity. Recording the information that indicates the regularity makes it unnecessary to record the mask information 62b for each frame so that the size of the recording region that is occupied by the image file 40 can be reduced.

As described above, the image capture is performed by using the motion-image image capturing function B, and the recording control section of the control unit 23 records at the memory card 25 the image file 40 in which the image information 64 generated by the image sensor 22 that is capable of setting imaging conditions for each of the unit groups 32is correlated with data regarding the imaging conditions for each of the unit groups 32 (the imaging condition information 61, the mask information 62, the Tv value map 65, the Sv value map 66, and the Bv value map 67, etc.). This mode of recording image files is referred to as a "batch storage mode (image set type)" in the description.

### (5) Mixed image capturing function (motion-image and still-image)

Mixed image capturing function is a function obtained by combining the still-image image capturing function B and the motion-image image capturing function B, which allows simultaneous image capturing of a still-image and a motion-image relating to the same subject under mutually different imaging conditions by a single imaging operation.

In the mixed image capturing function, the control unit 23 further classifies a plurality of unit groups 32 that is arranged in a two-dimensional array into a plurality of large groups 81 in a manner similar to those of the still-image image capturing function B and the motion-image image capturing function B. The control unit 23 performs motion-image image capturing for some of the large groups 81 in the same manner as that of the motion-image image capturing function B. The control unit 23 performs still-image image capturing in the same manner as that of the still-image image capturing function B during its motion-image image capturing by using the other large groups 81. This still-image image capturing may be performed, for instance, at a constant cycle repeatedly (automatic image capturing) or may be performed in response to a specified actuation by the user (manual image capturing).

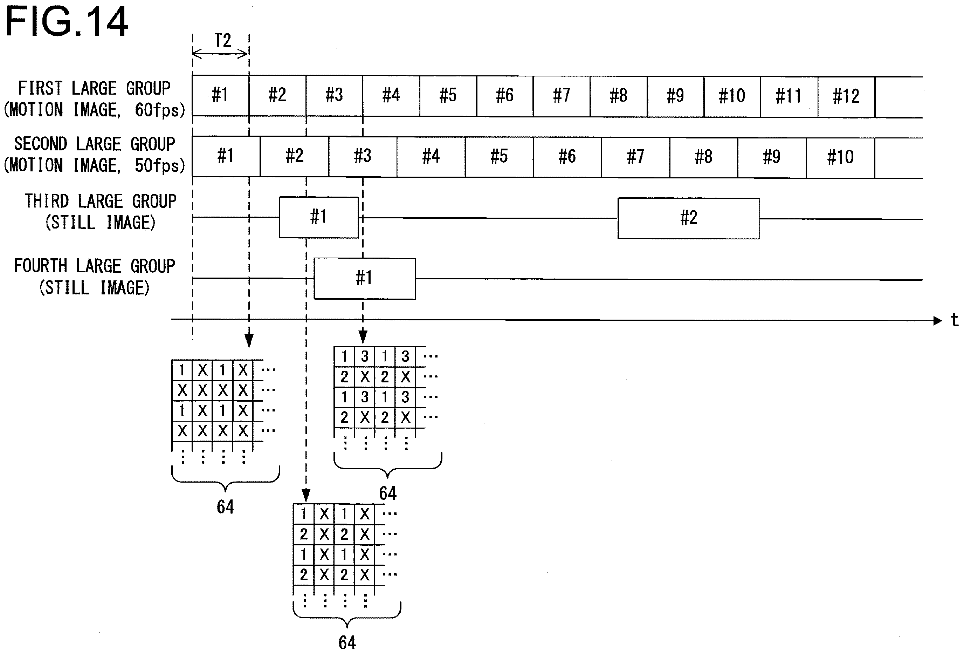

FIG. 14 is an illustrative diagram for illustrating the mixed image capturing function. Here, four large groups 811 to 814 are assumed to be present. Among them, 60fps motion-image image capturing is performed for the first large group 811, 50fps motion-image image capturing is performed for the second large group 812, and still-image image capturing is performed in the third and fourth large groups 813, 814.

The control unit 23 records each frame based on the fastest frame rate (for instance, 60fps) as a standard similarly to the motion-image image capturing function B. While the still-image image capturing is not performed, always no imaging signal is read out from the unit groups 32 belonging to the third and fourth large groups 813, 814. That is, the image information 64 that is recorded frame by frame does not contain imaging signals of the unit groups 32 belonging to the third and fourth large groups 813, 814 that correspond to still-images. When the control unit 23 performs still-image image capturing, it causes, at timing at which still-image image capturing is completed (i.e., at timing at which imaging signals are read out from the unit groups 32 that belong to the third and fourth large groups 813, 814), the image information 64 that corresponds to a frame immediately after the completion of the still-image image capturing to contain the imaging signals that have been read out as a result of that still-image image capturing.

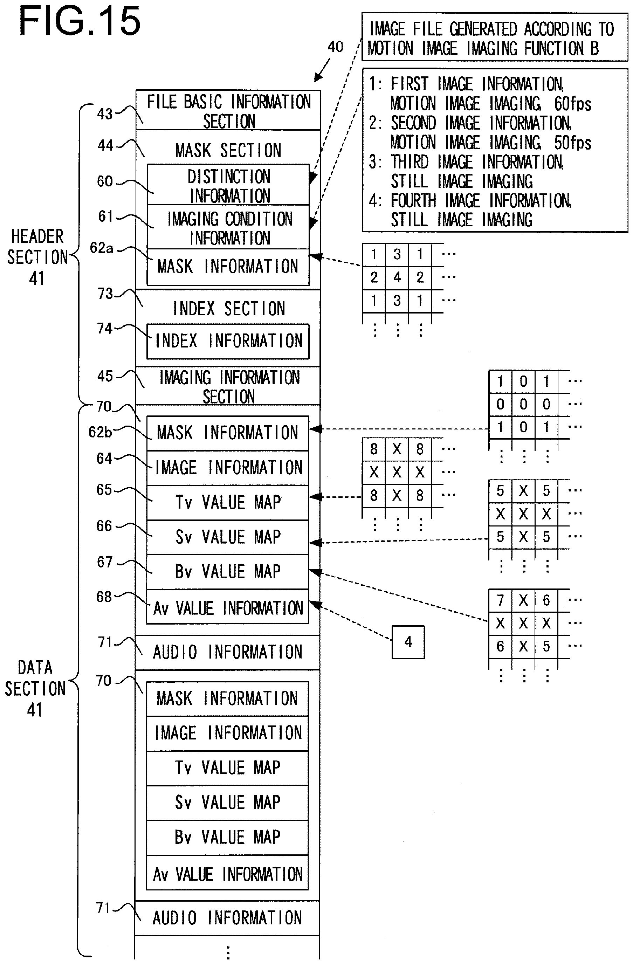

FIG. 15 is a diagram schematically showing the structure of the image file 40 that is generated when imaging is performed by using a mixed image capturing function. Hereafter, differences of the mixed image capturing function from the motion-image image capturing function B as shown in FIG. 13 are described in detail.

The distinction information 60 indicates that the image file 40 is generated by using the mixed image capturing function. The imaging condition information 61 is information that indicates what uses the unit groups 32 have. In the case of the mixed image capturing function, the imaging condition information 61 is information that indicates that, for instance, upon generating the image file 40, the unit groups 32 have four kinds of uses, i.e., a use of "configuring first image information 641, which is a motion-image of 60fps", a use of "configuring second image information 642, which is a motion-image of 30fps", a use of "configuring third image information 643, which is a still-image", and a use of "configuring fourth image information 644, which is a still-image" and that represents unique numbers allotted to these uses, respectively. For instance, numbers 1 to 4 are allotted to the uses of "configuring the first to fourth pieces of image information 641 to 644".

The mask information 62a in the case of the mixed image capturing function is information that indicates respective uses of the unit groups 32 similarly to the case of the motion-image image capturing function B. That is, the mask information 62a is "information expressed in the form of a two-dimensional map obtained by plotting the numbers allotted to the imaging condition information 61 in accordance with the positions of the unit groups 32". For instance, when the number of "1" is present at the coordinate (3, 5) of the mask information 62a, the unit group 32 at the coordinate (3, 5) belongs to the first large group 811, that is, constitutes the first image information 641.

In the case of the mixed image capturing function, the header section 41 additionally contains an index section 73. In the index section 73 is recorded index information 74 that indicates which block 70 among a plurality of blocks 70 (corresponding to a plurality of frames, respectively) has stored therein a still-image. The index information 74 includes, for instance, one or a plurality of pieces of information (corresponding to the number of times of still-image image capturing) such as information "third image information 643 contained in the fifth frame image information 64 includes a still-image". The index section 73 is provided so that a still-image can be quickly searched from a plurality of blocks 70.

Note that the index information 74 may be information other than that identifies the recording position of the still-image based on the number of frames. For instance, the recording position of the still-image can be identified based on the reproduction time of the motion-image. In this case, the index information 74 is, for instance, information indicating that "the third image information 643 in the image information 64 at time of 3 minutes 15 seconds contains a still-image".

The recording control section of the control unit 23 adds the frame number for which still-image image capturing is performed and time at which still-image image capturing is performed to the index section 73 as the index information 74 each time the still-image image capturing is performed while image capturing is being performed by using the mixed image capturing function. Note that the control unit 23 may be configured to store the index section 73 in the DRAM 27 temporarily and transfer the information in the DRAM 27 to the index section 73 of the image file 40 in the memory card 25 when the mixed image capturing function is terminated instead of directly adding the index information 74 to the index section 73 of the image file 40 within the memory card 25.

The configuration of the data section 42 is the same as that in the case of the motion-image image capturing function B. That is, in the data section 42, a block 70 for one frame quota is stored for each frame in the order of image capturing. A single block 70 is constituted by the mask information 62, the image information 64, the Sv value map 66, the Tv value map 65, the Bv value map 67, and the Av value information 68. In the data section 42, the audio information 71 together with the block 70 for each frame is stored.

As described above, by performing image capturing using the mixed image capturing function, the recording control section of the control unit 23 records, at the memory card 25, the image file 40 in which the image information 64 that is generated by the image sensor 22 that is capable of setting imaging conditions separately for each of the unit groups 32 is correlated with data (the imaging condition information 61, the mask information 62, the Tv value map 65, the Sv value map 66, and the Bv value map 67, etc.) relating to the imaging conditions for each of the unit groups 32. This mode of recording image files is referred to as a "batch storage mode (image set type)".

Then, a reproduction process of an image by the control unit 23 will be explained below. The reproduction process of an image is a process for generating an image of a subject from the image files 40 that are recorded in the memory card 25 by using the above-described various types of image capturing functions. The control unit 23 may for instance, display the generated image on the liquid crystal monitor 24 or may record the generated image in the memory card 25 as a file separate from the image file 40.

The read-out section of the control unit 23 opens the image file 40 (FIG. 5, FIG. 7, FIG. 10, FIG. 13, and FIG. 15) and reads out at first the file basic information section 43 through an input unit not shown in figures. This enables the offset and size of the mask section 44, the data section 42, etc. of the image file 40 to be found. Then, the read-out section of the control unit 23 reads out the distinction information 60 from the mask section 44 of the image file 40 through the input unit not shown in figures. As a result, the control unit 23 can recognize which image capturing function is used for generating the image file 40. Subsequent processing may differ for different image capturing functions. Accordingly, reproduction process of an image is explained for each of the above-mentioned image capturing functions.

### (1) Still-image image capturing function A (single still-image)

When the image file 40 is recognized as a file that is generated by using the still-image image capturing function A as shown in FIG. 5, the read-out section of the control unit 23 reads out the imaging condition information 61 and the mask information 62a from the mask section 44 through an input unit not shown in figures. As a result, the specifying section of the control unit 23 can recognize which range (which unit groups 32) among the whole image capture screen is a main subject part or a background part so as to differ image appearances between the main subject part and the background part. For instance, the main subject part is subjected to an edge enhancement process to make the image sharper and the background part is subjected to an airbrushing or blurring process to emphasize the main subject part.

Then, the read-out section of the control unit 23 reads out the image information 64, the Tv value map 65, the Sv value map 66, the Bv value map 67, and the Av value information 68 from the data section 42. Then, the control unit 23 executes a so-called development process on the image information 64 based on the Tv value map 65, the Sv value map 66, the Bv value map 67, and the Av value information 68 that are thus read out. When the image information 64 is RAW data, the generation section of the control unit 23 executes, for instance, a well-known demosaicing process on the image information 64 having no color information to generate an image having color information. Also, the control unit 23 performs image processing such as adjustment of color, brightness, etc., noise reduction, etc. based on the Sv value map 66, etc. For instance, unit groups 32 having larger Sv values (higher sensitivities) tend to have more noises than other unit groups 32. Accordingly, the control unit 23 reduces noises more intensely when Sv values are larger. The control unit 23 can, for instance, display the image thus generated on the liquid crystal monitor 24 or record it in the memory card 25.

As described above, for reproducing the image file 40 generated by using the still-image image capturing function A, the read-out section of the control unit 23 reads out the imaging condition information 61 and the mask information 62a recorded in the mask section 44 prior to reading out the information recorded in the data section 42, such as the image information 64, etc. This can minimize the seek time that will be generated upon reproduction process since the mask section 44 is recorded before the data section 42.

Note that as described above, in the data section 42 is stored the mask information 62b that is the same as the mask information 62a stored in the header section 41. Accordingly, the read-out section of the control unit 23 may be configured to read out the mask information 62b from the data section 42 instead of the mask information 62a.

### (2) Motion-image image capturing function A (single motion-image)

When the control unit 23 recognizes that the image file 40 is a file generated by using the motion-image image capturing function A as shown in FIG. 7, it reads out the mask information 62a from the mask section 44. The control unit 23 determines which range (which unit groups 32) out of the whole image capture screen is a main subject part or a background part. Subsequently, the read-out section of the control unit 23 reads out the imaging condition information 61 from the mask section 44. As a result, the control unit 23 can recognize frame rates of the main subject part and of the background part. Then, the read-out section of the control unit 23 reads out the image information 64, the Tv value map 65, the Sv value map 66, the Bv value map 67, and the Av value information 68 from the blocks 70 of the data section 42 in order starting from the head block and generates each frame that constitutes a motion-image based thereon.

When generating each of the frames, the read-out section of the control unit 23 at first reads out the mask information 62b from the block 70. Then, it determines which range (which unit groups 32) in the frame is a main subject part or a background part. Thereafter, the control unit 23 executes different image processes on the main subject part and on the background part as explained with respect to the still-image image capturing function A. The control unit 23, for instance, displays the motion-image constituted by the frames that are generated as described above on the liquid crystal monitor 24 or records it in the memory card 25.

As described above, for reproducing the image file 40 that is generated by using the motion-image image capturing function A, the control unit 23 reads out the mask information 62b prior to the information recorded in the block 70, such as image information 64, etc. Since the mask information 62b is recorded before the image information 64, etc., the seek time that will occur upon reproduction process can be minimized.

Note that since the mask information 62b in the head block of the data section 42 is the same information as the mask information 62a recorded at the mask section 44, the read-out section of the control unit 23 may be configured so as not to read out the mask information 62a from the mask section 44.

### (3) Still-image image capturing function B (a plurality of still-images)

When the image file 40 is recognized as a file that is generated by using the still-image image capturing function B as shown in FIG. 10, the read-out section of the control unit 23 reads out the imaging condition information 61 and the mask information 62a from the mask section 44. This allows the control unit 23 to determine how many kinds of still-images are captured simultaneously and which unit groups 32 constitutes any one of still-images. That is, it determines how many large groups 81 are present and to which large group each of the unit groups 32 belongs.

Then, the read-out section of the control unit 23 reads out the image information 64, the Tv value map 65, the Sv value map 66, the Bv value map 67, and the Av value information 68 from the data section 42. Then, the generation unit of the control unit 23 executes a so-called development process on the image information 64 for each large group 81 separately based on the Tv value map 65, the Sv value map 66, the Bv value map 67, and the Av value information 68 to generate a still-image. As a result, a plurality of still-images (for instance, four still-images) is generated. The control unit 23, for instance, displays the images generated as described above on the liquid crystal monitor 24 or records them in the memory card 25.

As described above, for reproducing the image file 40 that is generated by using the still-image image capturing function B, the control unit 23 reads out the imaging condition information 61 and the mask information 62a recorded in the mask section 44 prior to the information recorded in the data section 42, such as the image information 64, etc. Since the mask section 44 is recorded before the data section 42, the seek time that will occur upon reproduction process can be minimized.

Note that as described above, the mask information 62b which is the same information as the mask information 62a stored in the header section 41 is stored in the data section 42. Accordingly, the mask information 62b may be read out from the data section 42 instead of the mask information 62a.

### (4) Motion-image image capturing function B (a plurality of motion-images)

When the image file 40 is recognized as a file that is generated by using the motion-image image capturing function B as shown in FIG. 13, the read-out section of the control unit 23 reads out the mask information 62a and the imaging condition information 61 from the mask section 44. This allows the control unit 23 to determine how many kinds of motion-images are captured simultaneously, which unit groups 32 constitute any one of motion-images, and the frame rate of each motion-image. That is, it determines how many large groups 81 are present, which large group 81 each of the unit groups 32 belongs to, and the frame rate at which each of the large groups 81 is imaged. Then, the control unit 23 reads out the image information 64, the Tv value map 65, the Sv value map 66, the Bv value map 67, and the Av value information 68 from the head and subsequent blocks 70 in the data section 42 in order and generates each of the frame that constitute each of the motion-images based thereon.

When generating each of the frames, the read-out section of the control unit 23 at first reads out the mask information 62b from the block 70. Then the control unit 23 determines which large group 81 the pixel signal contained in the image information 64 in the block 70 corresponds to. Thereafter, the control unit 23 generates a frame that corresponds to each of the large groups 81. However, it generates no frame for a large group 81 if no pixel signal corresponding to this large group 81 is contained in the image information 64 in the block 70. The control unit 23, for instance, displays the motion-image constituted by the frames that are generated as described above on the liquid crystal monitor 24 or records it in the memory card 25.

As described above, for reproducing the image file 40 that is generated by using the motion-image image capturing function B, the control unit 23 reads out the mask information 62a, 62b prior to the information recorded in the block 70, such as the image information 64, etc. Since the mask information 62a, 62b is recorded before the image information 64, etc., the seek time that will occur upon the reproduction process can be minimized.

Note that since the mask information 62b in the head block in the data section 42 is the same information as the mask information 62a recorded in the mask section 44, the read-out section of the control unit 23 may be configured so as not to read out the mask information 62a from the mask section 44.

### (5) Mixed-image image capturing function (motion-image and still-image)

When the image file 40 is recognized as a file generated by using the mixed image capturing function as shown in FIG. 15, the readout section of the control unit 23 reads out the mask information 62a and the imaging condition information 61 from the mask section 44. This allows the control unit 23 to determine how many kinds of motion-images and how many kinds of still-images are captured simultaneously, which unit groups 32 constitutes any one of still-images and any one of motion-images, and the frame rate of each motion-image. That is, the control unit 23 determines how many large groups 81 are present, whether each of the large groups 81 is a still-image or a motion-image, the frame rate of each of the unit groups 32 if the large group 81 is a motion-image, and which large group 81 any one of the unit groups 32 belongs to. Then, the generation section of the control unit 23 reads the image information 64, the Tv value map 65, the Sv value map 66, the Bv value map 67, and the Av value information 68 from the blocks in the data section 42 in order starting from the head block 70 and generates, based thereon, each of the frames that constitute each of the motion-images and each of the still-images.

For generating each of the frames of a motion-image or a still-image, the control unit 23 at first reads out the mask information 62b from the block 70. Then, it determines which large group 81 the pixel signal contained in the image information 64 in the block 70 corresponds to. Thereafter, the control unit 23 generates a frame or a still-image that corresponds to each of the large groups 81. However, it generates neither frame nor still-image for a large group 81 if no pixel signal corresponding to this large group 81 is contained in their image information 64 in the block 70. The control unit 23, for instance, displays the motion-image that is constituted by the frames or the still-image generated as described above on the liquid crystal monitor 24 or records it in the memory card 25.

As described above, for reproducing the image file 40 that is generated by using the mixed image capturing function, the read-out section of the control unit 23 reads out the mask information 62a, 62b prior to the information recorded in the block 70, such as the image information 64, etc. Since the mask information 62a, 62b is recorded before the image information 64, etc, the seek time that will occur upon the reproduction process can be minimized.

Note that since the mask information 62b in the head block in the data section 42 is the same information as the mask information 62a recorded in the mask section 44, the read-out section of the control unit 23 may be configured to read out no mask information 62a from the mask section 44.

The reproduction process of images is a process by which an image of a subject is generated based on the image file 40 that is recorded in the memory card 25 by one of the above-mentioned various types of image capturing functions. However, it may be a process by which a still-image and/or a motion-image is generated based on the image file 40 before it can be recorded in the memory card 25. The control unit 23 may be configured to perform a compression process after the still-image and/or motion-image is generated.

Note that a configuration may be adopted in which an electronic apparatus that is different from the image capturing device 10 (hereafter, referred to as a reproduction device) executes the above-mentioned reproduction process. For instance, a configuration may be adopted in which when the memory card 25 is removed from the image capturing device 10 and attached to a reproduction device in a personal computer (PC), the reproduction device reads out the image file 40 from the memory card 25 and executes the above-mentioned reproduction process to reproduce an image. Also, a configuration may be adopted in which data communication, such as wireless communication, is performed between the image capturing device 10 and the reproduction device to transfer the image information 64, etc.

The image capturing device according to the above-mentioned first embodiment provides the following operations and advantageous effects.
(1) The image sensor 22 has a plurality of unit groups 32 (imaging regions) so that imaging condition can be set for each of the unit groups 32 separately. The recording control section of the control unit 23 records the image information 64 (image data) generated by the image sensor 22 in association with the data relating to imaging conditions, such as the imaging condition information 61, the mask information 62, the Tv value map 65, the Sv value map 66, and the Bv value map 67, and so on (imaging condition data) for each of the unit groups 32. This configuration makes it possible to know what imaging conditions have been applied to each of the pixels at the time of reproducing the image file 40, which is the result of the image capturing, or at some other timing. As a result, the image capturing device 10 which is user-friendly can be provided.
(2) The information relating to imaging conditions that is recorded in correlation with the image information 64 includes, for instance, information relating exposure upon capturing an image of a subject by the image sensor 22 and information relating to brightness of the subject whose image is captured by the image sensor 22. Specifically, the information relating to imaging conditions includes the Bv value map 67, which is information relating to the luminance of the subject whose image is captured by the image sensor 22, the Tv value map 65, which is accumulation time in which charges are accumulated by a photoelectric conversion unit not shown in the figures, the Sv value map 66, which is an amplification factor by an amplifying unit not shown in the figures, etc. Each of these pieces of information can be said to be information relating to the imaging operation of the image sensor 22. This configuration enables more suitable image processing to be performed upon reproduction of the image file 40.
(3) The recording control section of the control unit 23 is configured to record information relating to the imaging conditions, which varies on each image capturing, in association with the image information 64. This configuration enables suitable information to be added to each image file 40 and more suitable image processing to be performed upon reproduction.
(4) The recording control section of the control unit 23 is configured to record a plurality of pieces of information relating to imaging conditions that correspond to the image information 64, respectively, in a single image file 40 in chronological order. This configuration enables, for instance, when a motion-image is recorded in the image file 40, image processing based on these pieces of information to be performed with ease.
(5) The recording control section of the control unit 23 is configured to record, for the image file 40 that has the header section 41 and the data section 42 in which the image information 64 is recorded (image data section), information relating to imaging conditions in at least one of the header section 41 and the data section 42. By this configuration, it is possible to know what imaging conditions have been applied to each of the pixels, for instance, upon reproduction of the image file 40.
(6) The recording control section of the control unit 23 is configured to record the imaging condition information 61 and the mask information 62 relating to uses for a plurality of unit groups 32, respectively, in association with the image information 64. With this configuration, it is possible to know what imaging conditions have been applied to each of the pixels, for instance, upon reproduction of the image file 40.
(7) The mask information 62 contains dynamic information, which varies with time. Specifically, the mask information 62 contains information indicating whether the image information 64 includes a pixel value corresponding to a pixel signal that is read out from the imaging pixel 31 belonging to the unit group 32 or information indicating which one of a plurality of mutually different groups each of a plurality of unit groups 32 has been classified into. This enables image processing using dynamic information to be performed, for instance, upon reproducing the image file 40.
(8) The mask information 62 contains static information, which does not vary with time. Specifically, the mask information 62 contains information indicating respective functions of the plurality of unit groups 32. Furthermore, the mask information 62a contains information indicating which one of a plurality of mutually different groups each of the plurality of unit groups 32 has originally been classified into at the beginning of image capturing. This enables image processing using static information to be performed, for instance, upon reproducing the image file 40.
(9) The recording control section of the control unit 23 is configured to record, in a single image file 40, a plurality of pieces of the mask information 62b corresponding to the plurality of pieces of image information 64 in chronological order. This configuration enables chronological tracking of imaging conditions, for instance, upon reproducing the image file 40.
(10) The recording control section of the control unit 23 is configured to record, for the image file 40 that has the header section 41 and the data section 42 in which the image information 64 is recorded (image data section), the mask information 62 in at least one of the header section 41 and the data section 42. By this configuration, it is possible to know what imaging conditions have been applied to each of the pixels, for instance, upon reproduction of the image file 40.
(11) The plurality of unit groups 32 includes a unit group 32 for which image capturing is performed at a first frame rate and a unit group 32 for which image capturing is performed at a second frame rate that is slower than the first frame rate. The recording control section of the control unit 23 records a plurality of pieces of image information 64 based on the first frame rate. This enables recording the information relating to all the frames in every detail without fail.
(12) The recording control section of the control unit 23 is configured to record audio information 71 (audio data) corresponding to imaging periods of a plurality of pieces of image information 64 in correlation with the plurality of pieces of image information 64. This configuration enables reproduction of motion image including sound.
(13) The recording control section of the control unit 23 is configured to record at least one of information relating to an imaging pattern of the image information 64, information relating to a method of storing the image information 64, and information relating to imaging conditions for each unit group 32 at the header section 41 of the image file 40 that includes two blocks, i.e., the header section 41 and the data section 42. By this construction, it is possible to know what imaging conditions have been applied to each of the pixels, for instance, upon reproducing the image file 40.

### Second Embodiment

An image capturing device according to a second embodiment has a configuration similar to that of the image capturing device 10 according to the first embodiment. However, the methods for recording the image file 40 according to the still-image image capturing function B, the motion-image image capturing function B, and the mixed image capturing function are different from those in the first embodiment. Hereafter, this feature is described in detail.

As described above, the still-image image capturing function B, the motion-image image capturing function B, and the mixed image capturing function are each a function by which a plurality of still-images and/or a plurality of motion-images relating to the same subject are captured simultaneously by a single image capturing operation. In this embodiment, the recording control section of the control unit 23 is configured so as to divide the plurality of still-images and/or the plurality of motion-images thus captured into a plurality of image files 40 and record them separately instead of recording them into a single image file 40. On this occasion, the recording control section of the control unit 23 records the separately recorded image files 40 in association with each other. As a result, although the divided files are recorded separately for convenience's sake, the information indicating that the plurality of image files 40 has been acquired by a single imaging operation is not impaired, similarly to the first embodiment. In other words, the plurality of image files 40 can be handled later under recognition that they have been acquired by a single image capturing operation similarly to the case in the first embodiment.

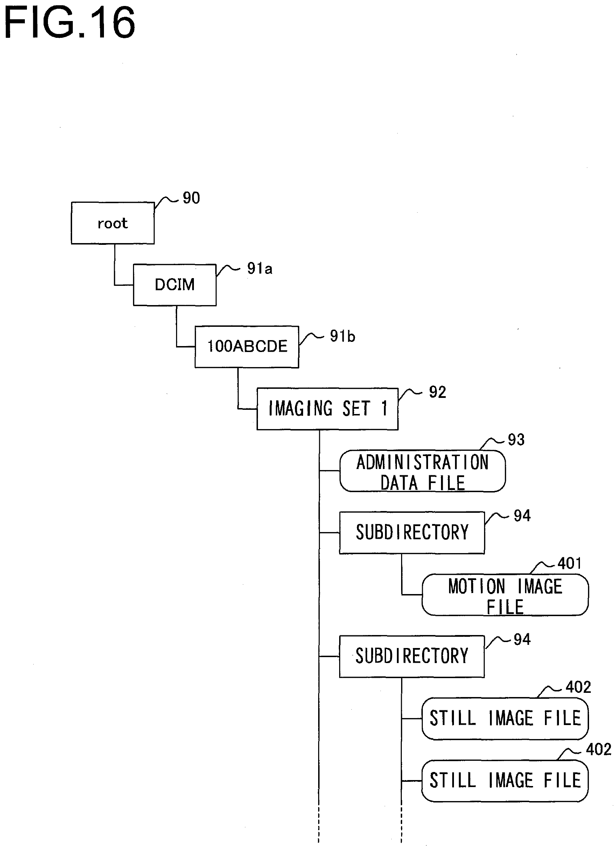

FIG. 16 is a diagram schematically showing a directory structure of the memory card 25. A root directory 90 of the memory card 25 has a DCIM directory 91a. The DCIM directory 91a has therein a subdirectory 91b for storing images. For each single image capturing operation by using the still-image image capturing function B, the motion-image image capturing function B, or the mixed image capturing function, the control unit 23 generates a single imaging set directory 92 in this subdirectory 91b. That is, one imaging set directory 92 corresponds to one image capturing operation.

In the image set directory 92, one administration data file 93 and subdirectories 94 for respective uses of the unit group 32 are generated. For instance, if a unit groups 32 have four uses, four subdirectories 94 are generated. For each of the subdirectories 94, at least one image file 40 corresponding to a use of the unit group 32 is generated. For instance, if the use of the unit group 32 is the motion-image image capturing, only one motion-image file 401 is recorded in the subdirectory 94 corresponding to this use. On the other hand, if the use of the unit group 32 is the still-image image capturing, a still-image file 402 is recorded in the subdirectory 94 a number of times that corresponds to the number of times of image capturing operation. Note that in the case of using the still-image image capturing function B, only one still-image file 402 is recorded for each of the uses by a single image capturing operation, so that one still-image file 402 is recorded in each subdirectory 94.

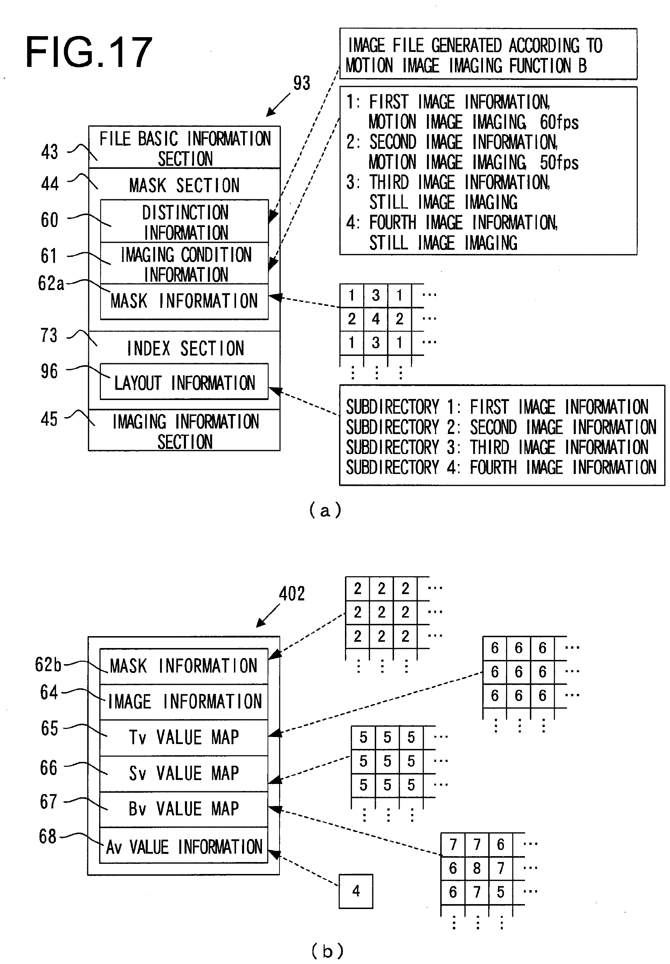

FIG. 17(a) is a diagram schematically showing the structure of the administration data file 93. The administration data file 93 is a file in which information that correlates the image files 40 recorded in the subdirectories 94 with each other and includes a file basic information section 43, a mask section 44, an index section 73, and an imaging information section 45. The file basic information section 43, the mask section 44, and the imaging information section 45 are the same as those sections having the same names in the image file 40 that are explained in FIG. 15, etc. In the index section 73, layout information 96 that indicates which use of the unit group 32 each of the subdirectories 94 corresponds to, is recorded.

FIG. 17(b) is a diagram schematically showing the structure of the still-image file 402 that is recorded in the subdirectory 94. In the still-image file 402 are recorded mask information 62b, image information 64, a Tv value map 65, a Sv value map 66, a Bv value map 67, and Av value information 68. Since the Av value information 68 is similar to that explained in FIG. 10 and explanation thereof is omitted.

The mask information 62b, the image information 64, the Tv value map 65, the Sv value map 66, and the Bv value map 67 are each information that is obtained by extracting only values corresponding to one of the large groups 81 from the information having the same name as explained in FIG. 10 and arranging the extracted values in a two-dimensional array. For instance, in the image file 40 that is explained in FIG. 10, the mask information 62b is "information that contains numbers allotted to imaging condition information 61 expressed in the form of a two-dimensional map in accordance with the positions of the unit groups 32". The number of values contained in the mask information 62b is the same as the number of the unit groups 32. In contrast, the mask information 62b in the still-image file 402 is information that is prepared by extracting from all the values only those values that correspond to the large group 81, which in turn corresponds to this subdirectory 94, and expressing the extracted values in the form of a two-dimensional map. The image information 64, the Tv value map 65, the Sv value map 66, and the Bv value map 67 are similarly prepared and one still-image file 402 contains only those values corresponding to one large group 81.

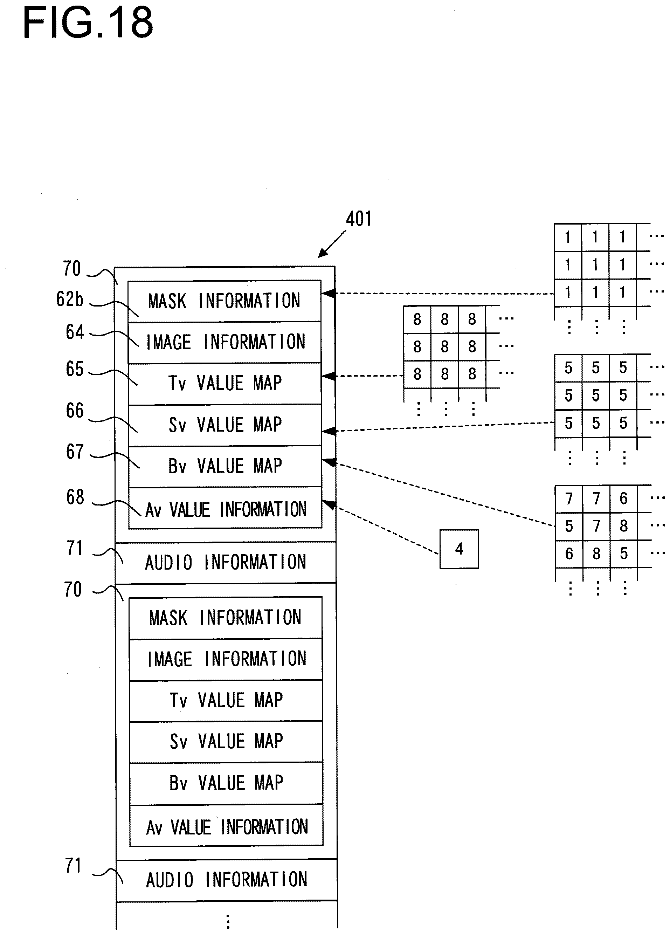

FIG. 18 is a diagram schematically showing the structure of the motion-image file 401 that is recorded in the subdirectory 94. In the motion-image file 401 is stored one frame quota block 70 for each of the frames in order of image capturing. A single block 70 includes mask information 62b, image information 64, a Tv value map 65, a Sv value map 66, a Bv value map 67, and Av value information 68. The motion-image file 401 has stored therein the block 70 for each frame together with audio information 71. Since the Av value information 68 is similar to that explained in FIG. 13 and explanation thereof is omitted.

The mask information 62b, the image information 64, the Tv value map 65, the Sv value map 66, and the Bv value map 67 are each information that is obtained by extracting only values corresponding to one large group 81 from the information having the same name as explained in FIG. 13 and arranging the extracted values in a two-dimensional array. This is the same as in the case of the above-mentioned still image file 402 and explanation thereof is omitted.

As described above, the recording control section of the control unit 23 records, at the memory card 25, the image information 64 that is generated by the image sensor 22 for which imaging conditions can be set for each of the unit groups 32 separately in association with data relating to the imaging conditions (the imaging condition information 61, the mask information 62, the Tv value map 65, the Sv value map 66, and the Bv value map 67, and so on.) for each unit group 32. Differently from the first embodiment, in this embodiment, the administration data file 93, the motion image file 401, and the still image file 402 are correlated with each other via the layout information 96 in the administration data file 93 although they do not form a single image file 40. This mode of recording image files is referred to as a "divided storage mode" in the description.

The image capturing device according to the second embodiment provides the similar operations and advantageous effects as those of the image capturing device according to the first embodiment.

### Third Embodiment

The image capturing device according to a third embodiment has a construction similar to that of the image capturing device 10 according to the first embodiment. The image capturing device according to the third embodiment differs from the image capturing device according to the first embodiment in that the device records information indicating that the unit group is an object of high dynamic range (hereafter, referred to as "HDR") that performs main image capturing in a wide dynamic range in the batch storage mode (time series type), the batch storage mode (image set type), and the divided storage mode as explained in the first and second embodiments. Hereafter, explanation will be made on the batch storage mode (time series type), the batch storage mode (image set type), and the divided storage mode separately.

### Batch storage mode (time series type)

First, the structure of the image file 40 in case that image capturing of a single still-image is performed (that is, still-image image capturing function A) as the batch storage mode (time series type) is explained. In the following explanation, it is assumed that image capturing is performed by using the still-image image capturing function A in such a manner that different imaging conditions are set to different set of the unit groups 32 that configure first image information 641 to fourth image information 644, respectively, among all the unit groups 32. For example, it is assumed as follows. The unit groups 32 that configure the image information 641 have a Tv value, which represents shutter speed, set to 1/500. The unit groups 32 that configure the second image information 642 have a Tv value set to 1/2000. The unit groups 32 that configure the third image information 643 have a Tv value set to 1/8000. For the unit groups 32 that configure the fourth image information, HDR is set. The unit group 32 that configures the fourth image information 644, to which HDR is set, is included in either one of a first HDR region that has a Tv value set to 1/2000 or a second HDR region that has a Tv value set to 1/500.

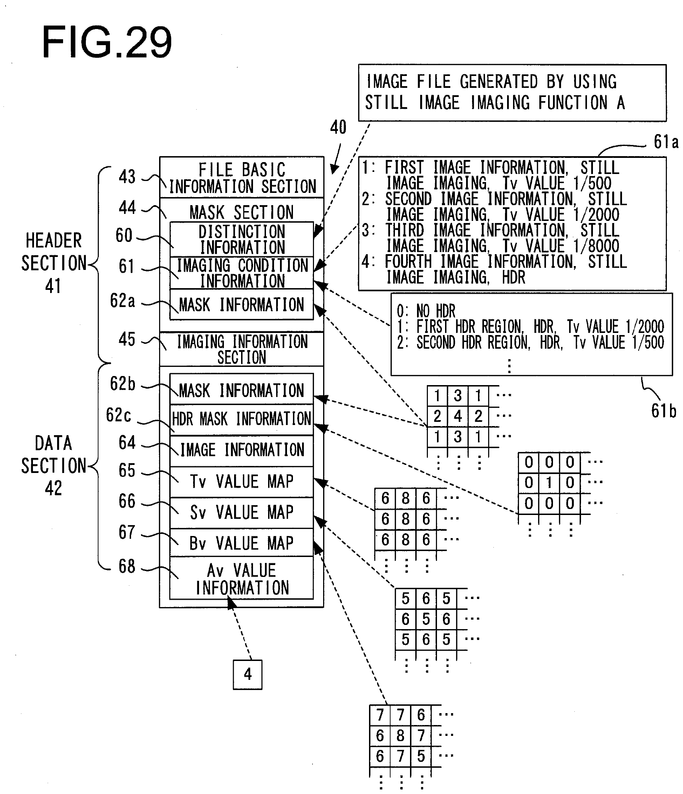

FIG. 29 schematically shows the structure of the image file 40 that has been created. Note that hereafter, explanation will be made mainly based on differences from the image file 40 that has been created by using the still-image image capturing function A in the first embodiment as shown in FIG. 10. As explained in the first embodiment, the imaging condition information 61 includes information indicating respective uses set to the respective unit groups 32 and unique numbers allotted to the respective uses (hereafter, referred to as "regional division information 61a") and in addition, HDR information 61b that indicates which HDR region the unit group 32 having HDR set thereto belongs to. The HDR information 61b is information that indicates which of the numbers that are uniquely allotted to the respective HDR regions is allotted to the unit group 32 to which HDR is set when creating the image file 40. For example, the numbers 1 and 2 are allotted to "first HDR region having a Tv value of 1/2000" and "second HDR region having a Tv value of 1/500", respectively. Note that the number "0" as the HDR information 61b is allotted to the unit groups 32 to which no HDR is set, that is, to the unit groups 32 for the first image information 641 to the third image information 643.

The mask information 62a in the header section 41 is, as in the case of the first embodiment, information expressed by arranging information representing the respective uses of the unit groups 32, i.e., the numbers allotted to the regional division information 61a in the imaging condition information 61, in a two-dimensional map in accordance with the positions of the unit groups 32. Note that also in this embodiment, the unit group 32 with the mask information 62a to which the number "0" is allotted is unused in image capturing (i.e., no image signal is read out at the time of main image capturing). This indicates that the image information 64 recorded at the data section 42 includes no information about the unit group 32 concerned (or invalid dummy information is recorded as the information about the unit group 32 concerned).

The structure of the data section 42 further includes HDR mask information 62c representing the distribution of the unit groups 32 to which HDR is set in addition to the same structure as that according to the first embodiment. That is, the data section 42 stores the mask information 62b, the HDR mask information 62c, the image information 64, the Tv value map 65, the Sv value map 66, the Bv value map 67, and the Av value information 68.

The HDR mask information 62c is information that is expressed by arranging the numbers allotted to the HDR information 61b in a two-dimensional map in accordance with the positions of the unit groups 32. For example, the number "1", if it is found at the coordinates (1, 4) of the HDR mask information 62c, indicates that the unit group 32 having the coordinates (1, 4) belongs to the first HDR region. The unit group 32 to which the number "0" is allotted at the coordinates (1, 4) is a unit group 32 for which image capturing has been performed with no HDR being set thereto, that is, a unit group 32 that belongs to any of the first image information 641 to the third image information 643, or it represents a unit group 32 for which the mask information 62b has the number "0" allotted thereto.

Note that the mask information 62b and the HDR mask information 62c may be unified to form single piece of mask information. Assuming that each cell of the mask information scales 8 bits, a configuration may be adopted in which, for example, the upper 4 bits are used for writing therewith the regional division information 61a and the information relating to valid/invalid in the same manner as the mask information 62b while the lower 4 bits are used for writing therewith the information relating to the HDR region in the same manner as the HDR mask information 62c.

The mask information 62b to be stored may be valid/invalid information for each unit group 32 instead of the same information as the mask information in the header section 41. For example, a map, which is obtained by two-dimensionally arranging the value "0" allotted to the unit group 32 that is unused in image capturing (from which no image signal is read out at the time of image capturing) and the value "1" allotted to the unit group 32 that is used in image capturing (from which an image signal is read out) according to the positions of the unit groups 32, may be stored at the data section 42. Note that the mask information 62b and the HDR mask information 62c may be unified to form a single piece of mask information. Assuming on this occasion that each cell of the mask information scales 8 bits, a configuration may be adopted that, for example, the upper 4 bits are used for writing therewith the information relating to valid/invalid while the lower 4 bits are used for writing therewith the information relating to the HDR region as in the HDR mask information 62c.

Although the header section 41 is designed to store the mask information 62a in the above explanation, the present invention is not limited to this. For example, the header section 41 may store the HDR mask information 62c in addition to the mask information 62a. Alternatively, the header section 41 may store the mask information obtained by unifying the mask information 62a and the HDR mask information 62c. Assuming on this occasion that each cell of the mask information scales 8 bits, a configuration may be adopted that, for example, the upper 4 bits are used for writing therewith the regional division information and the information relating to valid/invalid as in the mask information 62b while the lower 4 bits are used for writing therewith the information relating to the HDR region.

Note that instead of creating a single piece of HDR mask information 62c, HDR mask information may be created for each of the first image information 641 to the fourth image information 644. That is, first HDR mask information corresponding to the unit group 32 that configures first image information 641, second HDR mask information corresponding to the unit group 32 that configures the second image information 642, third HDR mask information corresponding to the unit group 32 that configures the third image information 643, and fourth HDR mask information corresponding to the unit group 32 that configures the fourth image information 644 are created. On this occasion, the number "0" is allotted to the positions of the unit groups 32 for the first HDR mask information to the third HDR mask information and the number "1" or "2" is allotted to the positions of the unit groups 32 for the fourth HDR mask information.

The fourth HDR mask information may be divided into HDR mask information representing the first HDR region and HDR mask information representing the second HDR information. In this occasion, for the HD mask information representing the first HDR region, the number "1" is allotted to the position of the unit group 32 included in the first HDR region and the number "0" is allotted to the position of the unit group 32 included in the second HDR region. For the HD mask information representing the second HDR region, the number "0" is allotted to the position of the unit group 32 included in the first HDR region and the number "2" is allotted to the position of the unit group 32 included in the second HDR region.

Now, the structure of the image file 40, in case that image capturing of a still-image and a motion image is performed in the batch storage mode (time series type) is explained. In the following, explanation is made on the assumption that image capturing of the motion image is performed at 30fps according to ISO400 at the unit group 32 that configures the first image information 641, image capturing of the still image is performed according to ISO400 at the unit group 32 that configures the second image information 642, image capturing of the motion image is performed at 30fps according to ISO1600 at the unit group 32 that configures the third image information 643, and image capturing of the motion image is performed at 30fps by adopting HDR at the unit group 32 that configures the fourth image information 644. The unit group 32 that configures the fourth image information 644, to which HDR is set, is included in either the first HDR set to ISO400 or the second HDR region set to ISO1600.

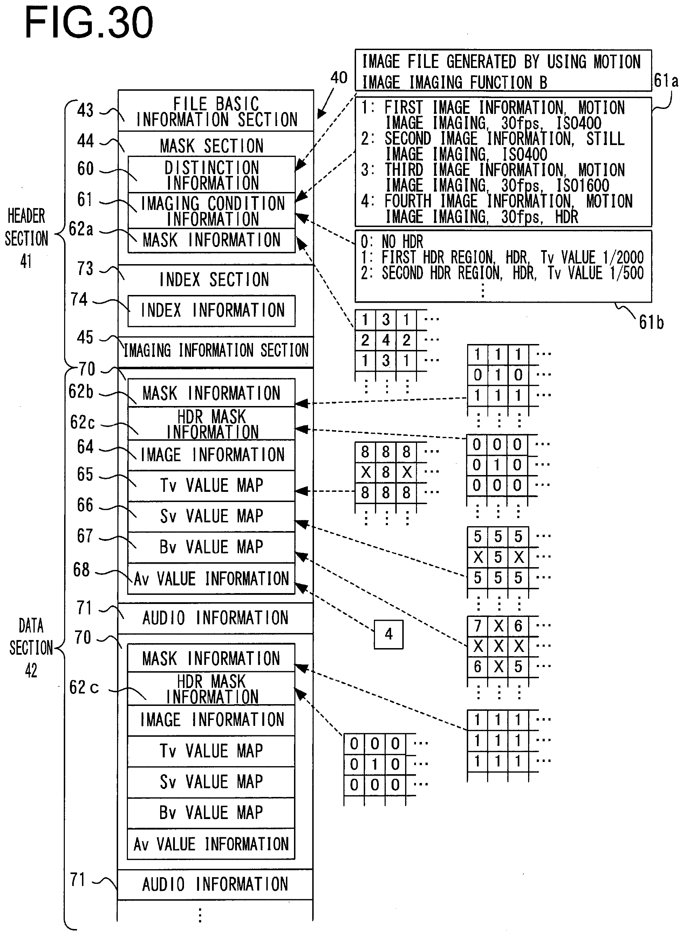

FIG. 30 schematically shows the structure of the image file 40 created in this case. As with the image file 40 created by still-image image capturing, the imaging condition information 61 to be recorded in the header section 41 includes the regional division information 61a and the HDR information 61b. In the example shown in FIG. 30, the numbers 1 and 2 are allotted to "first HDR region according to ISO400" and "second HDR region according to ISO1600", respectively. Note that the number "0" as the HDR information 61b is allotted to the unit group 32 to which no HDR is set.

The mask information 62a stored at the header section 41 includes information indicating validity/invalidity of the unit group 32. This indicates that the unit group 32 corresponding to which the number "0" is allotted in the mask information 62a is unused in image capturing (from which no image signal is read out) and the image information 64 stored at the data section 42 includes no information relating to the unit group 32 concerned (or dummy information which is invalid is recorded as the information relating to the unit group 32 concerned).

The data section 42 has the mask information 62b and the HDR mask information 62c that represents the distribution of unit groups to which HDR is set. The HDR mask information 62c, as with the case of still-image image capturing described above, is information expressed in the form of a two-dimensional map of the numbers allotted to the HDR information 61b arranged according to the positions of the unit groups 32.

In the example shown in FIG. 30, it is assumed that no still-image image capturing is performed at the unit group 32 that configures the second image information 642 for the first frame. In this case, the number "0" is allotted to the position of the unit group 32 that configures the second image information 642 in the mask information 62b of the block 70 that corresponds to the first frame. The number "1" is allotted to the unit groups 32 that configure the first image information 64, the third image information 643, and the fourth image information 644, respectively. The HDR mask information 62c of the block 70 that corresponds to the first frame, as with the case of image capturing by using the still-image image capturing function B, is information expressed in the form of a two-dimensional map of the numbers allotted to the HDR information 61b arranged according to the positions of the unit groups 32.

In the example shown in FIG. 30, it is assumed that still-image image capturing is performed at the unit group 32 that configures the second image information 642 for the second frame. In this case, the number "1" is allotted to the positions of the unit groups 32 that configure the first image information 641 to the fourth image information 644 in the mask information 62b of the block 70 that corresponds to the second frame. In the block 70 that corresponds to the second frame, also the HDR mask information 62c is expressed in the form of a two-dimensional map of the numbers allotted to the HDR information 61b arranged according to the positions of the unit groups 32. If changes occur in the position of the first HDR region and the second HDR due to, for instance, movement of a subject during the motion-image image capturing, the numbers allotted to the coordinates in the HDR mask information 61b also change in response to such changes.

Note that the mask information 62b and the HDR mask information 62c may be unified to form a single piece of mask information. In this case too, a configuration may be adopted in which, assuming that each cell of the mask information scales 8 bits, for example, the upper 4 bits are used for writing therewith the information relating to validity/invalidity similar to the mask information 62b while the lower 4 bits are used for writing therewith the information relating to the HDR region similar to the HDR mask information 62c.

Note that the mask information 62a may be information expressed in the form of a two-dimensional map of the numbers allotted to the information representing the use of each unit group 32, that is, the numbers allotted to the regional division information 61a included in the imaging condition information 61, arranged according to the positions of the unit groups 32. In this case, too, the mask information 62b and the HDR mask information 62c may be unified to form a single piece of mask information. That is, assuming that each cell of the mask information scales 8 bits, a configuration may be adopted that, for example, the upper 4 bits are used for writing therewith information similar to the information relating to the regional division information 61a in the mask information 62b while the lower 4 bits are used for writing therewith information relating to the HDR region similar to the HDR mask information 62c.

### Batch storage mode (image set type)

First, the structure of the image file 40 in a batch storage mode (image set type) is explained for the case in which a single still-image is captured (that is, using still-image image capturing function B). In this case, at the data section 42 of the generated image file 40 are recorded the mask information and the HDR mask information for each large group 81. The following explanation is made taking an example in which image capturing of a still-image is performed under the same imaging conditions as those exemplified when the batch storage mode (time series type) was explained.

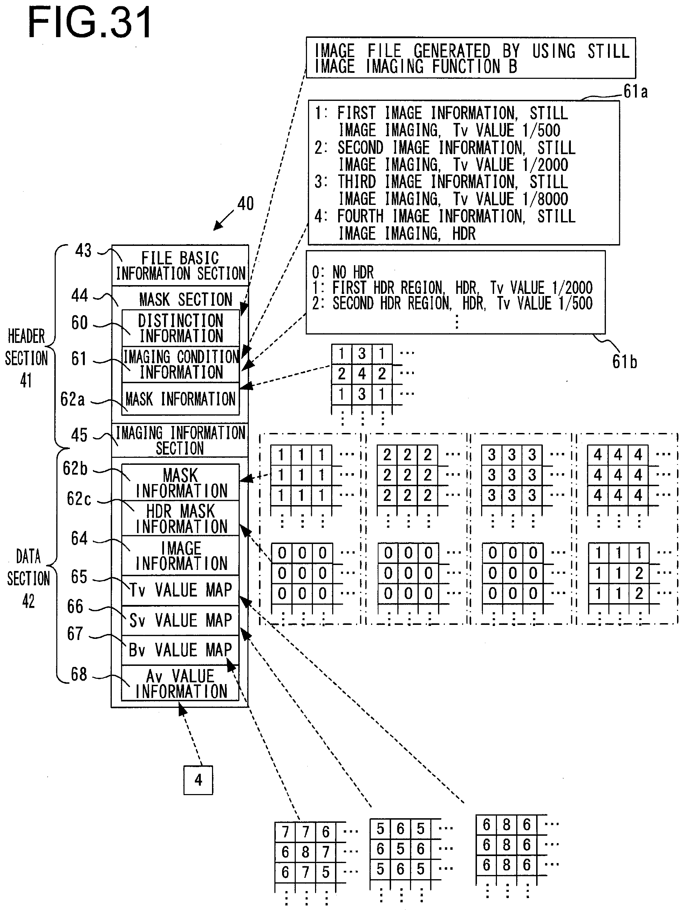

FIG. 31 schematically shows the structure of the generated image file 40. For the large group 81 that corresponds to the first image information 641, the number "1" is allotted to the position of the each unit group 32 in the mask information 62b, and the number "0" is allotted to the position of each unit group 32in the HDR mask information 62c. Further, for the large group 81 that corresponds to the second image information 642, the number "2" is allotted to the position of each unit group 32 in the mask information 62b, and the number "0" is allotted to the position of each unit group 32 in HDR mask information 62c. Still further, for the large group 81 that corresponds to the third image information 643, the number "3" is allotted to the position of each unit group 32 in the mask information 62b, and the number "0" is allotted to the position of each unit group 32 in the HDR mask information 62c. Yet further, for the large group 81 that corresponds to the fourth image information 644, the number "4" is allotted to the position of each unit group 32 in the mask information 62b, and the number "1" or "2" is allotted to the position of each unit group 32 in the HDR mask information 62c.

In this case, a configuration may be adopted in which unified mask information obtained by unifying the mask information 62b with the HDR mask information 62c may be recorded at the data section 44 instead of the configuration in which the mask information 62b and the HDR mask information 62c are recorded for each large group 81 at the data section 44. Assuming on this occasion that each cell of the mask information scales 8 bits, a configuration may be adopted that, for example, the upper 4 bits are used for writing therewith the regional division information 61a and the information relating to valid/invalid while the lower 4 bits are used for writing therewith the information relating to the HDR region, as already explained with respect to the batch storage mode (time series type).

Furthermore, a configuration may be adopted in which a single value representing the regional division and the HDR mask information 62c are recorded at the data section 44 instead of the configuration in which the mask information 62b and the HDR mask information 62c are recorded at the data section 44 for each large group 81. That is, the single value representing the regional division does not form information in the form of a two-dimensional map. In this case, the number "1" is allotted as the regional division information of the large group 81 that corresponds to the first image information 641, and the number "0" is allotted at the position of each unit group 32 in the HDR mask information 62c. The number "2" is allotted as the regional division information of the large group 81 that corresponds to the second image information 642, and the number "0" is allotted to the position of each unit group 32 in the HDR mask information 62c. The number "3" is allotted as the regional division information that corresponds to the third image information 643, and the number "0" is allotted to the position of each unit group 32 in the HDR mask information. The number "4" is allotted as the regional division information of the large group 81 that corresponds to the fourth information 644, and the number "1" or "2" is allotted to the position of each unit group 32 in the HDR mask information 62c.

If the numbers of the unit groups 32 included in the respective large groups 81 are different from one another, each large group 81 have the mask information and the HDR mask information with different data sizes. In this case, a construction may be adopted in which the mask information and the HDR mask information 62c have data sizes that are the same for all the large groups 81.

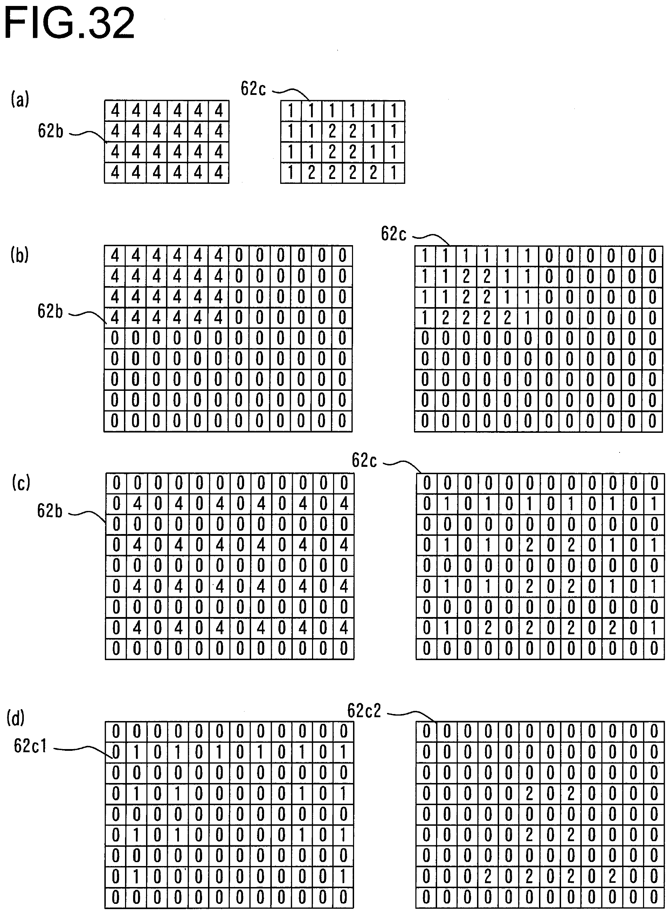

FIG. 32 schematically shows the mask information 62b and the HDR mask information 62c in this case. FIG. 32(a) illustrates the case in which the number "4" is allotted to the position of each unit group 32 as the mask information 62b (for example, 4×6) of the large group 81 that corresponds to the fourth information 644 mentioned above and the number "1" or "2" is allotted to the position of each unit group 32 as the HDR mask information 62c (for example, 4×6). FIG. 32(b) and FIG. 32(c) illustrate the cases in which the mask information 62b and the HDR mask information 62c thus illustrated are adjusted to have the same data sizes as the data sizes of other mask information and of other HDR mask information. Note that the data sizes of the mask information 62b and of the HDR mask information 62c are adjusted to the number of all the unit groups 32 (for example, 9×12) included in the image capturing screen 50 of the image sensor 22.

FIG. 32(b) illustrates the case in which for example, the numbers allotted to the mask information 62b and the HDR mask information 62c as shown in FIG. 32(a) are allotted to the unit groups 32 included in a portion of the region (upper left end in FIG. 32(b)) among all the unit groups (9×12) and the number "0" is allotted to the unit groups 32 included in the other region. FIG. 32(c) illustrates the case in which for the mask information 62b, the number "4" is allotted to the positions of the unit groups 32 corresponding to the fourth image information 644 and the number "0" is allotted to the positions of the other unit groups 32. For the HDR mask information 62c, the number "1" or "2" is allotted to the positions of the unit groups 32 corresponding to the fourth image information 644.

Note that the HDR mask information 62c shown in FIG. 32(c) may be divided into HDR mask information 62c1 that represents the first HDR region and HDR mask information 62c2 that represents the second HDR region. FIG. 32(d) schematically shows the HDR mask information in this case. For the HDR mask information 62c1 representing the first HDR region, the number "1" is allotted to the positions of the unit groups 32 included in the first HDR region and the number "0" is allotted to the positions of the other unit groups 32. For the HDR mask information 62c2 representing the second HDR region, the number "2" is allotted to the positions of the unit groups 32 included in the second HDR region and the number "0" is allotted to the positions of the other unit groups 32.

In the image file 40 in the batch storage mode (image set type), in which image capturing of a still image and a motion image is performed, as with the case in which image capturing of a single still image is performed, mask information and HDR mask information for each large group 81 are recorded in the data section 42 of the generated image file 40.

Note that when a still image and a motion image are recorded in the batch storage mode (image set type), the HDR mask information 62c may be recorded at the last part of the data section 42. In this case, the mask information 62b is recorded in the front part of the data section 42. Note that instead of the mask information 62b, a single value that represents region information may be recorded at the front part of data section 42. In this case, it is preferable to record at the mask section 44 of the header section 41 address information indicating the position at which the HDR mask information 62c is recorded.

Alternatively, the HDR mask information 62c may be recorded in a file different from the image file 40. In this case, the mask information 62b is recorded at the data section 42 of the image data 40. Instead of the mask information 62b, a single value indicating region information may be recorded. In this case, it is preferred that file path information indicating the position of the file that records the HDR mask information 62c is recorded at the mask section 44 of the header section 41.

### Divided storage mode

First, for explaining the divided storage mode, explanation is made on the structure of the image file 40 in the case where image capturing of a single still image is performed. In this case, mask information and HDR mask information for each large group 81 are recorded in a still-image file 402 to be recorded in a subdirectory 94. The following explanation is made taking an example of the case where image capturing of a still image is performed under the same imaging conditions as those exemplified when the batch storage (time series type) is explained.

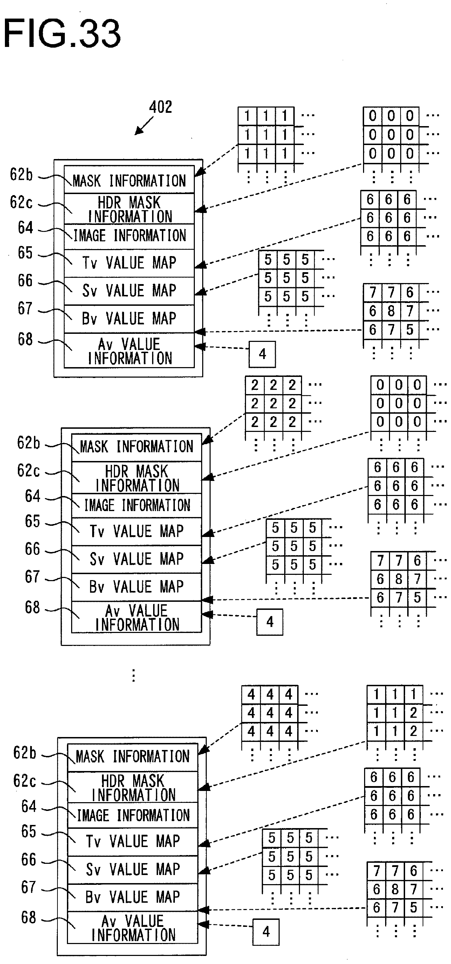

FIG. 33 schematically shows the structure of the generated still-image files 402. In a file in which image signals from the unit groups 32 of the large group 81, which correspond to the first image information 641, are put together, the number "1" is allotted to the position of each unit group 32 for the mask information 62b and the number "0" is allotted to the position of each unit group 32 for the HDR mask information. In a file in which image signals from the unit groups 32 of the large group 81, which correspond to the second image information 642, are put together, the number "2" is allotted to the position of each unit group 32 for the mask information 62b and the number "0" is allotted to the position of each unit group 32 for the HDR mask information 62c. In a file in which image signals from the unit groups 32 of the large group 81, which correspond to the third image information 643, are put together, the number "3" is allotted to the position of each unit group 32 and the number "0" is allotted to the position of each unit group 32 for the HDR mask information 62c. In a file in which image signals from the unit groups 32 of the large group 81, which correspond to the fourth image information 643, are put together, the number "4" is allotted to the position of each unit group 32 and the number "1" or "2" is allotted to the position of each unit group 32 for the HDR mask information 62c.

Note that in this case too, a configuration may be adopted in which, instead of the mask information 62b and the HDR mask information 62c to be recorded for each file, unified mask information obtained by unifying the mask information 62b with the HDR mask information 62c is recorded as explained for the batch storage mode (image set type). Alternatively, a single value representing regional division and the HDR mask information 62c may be recorded for each file. In other words, mask information may not be recorded.

Also in the divided storage mode, a configuration may be adopted in which the mask information 62b and the HDR mask information 6c have the same data size as explained for the batch storage mode (image set type) referring to FIG. 32.

In the image file 40 in the divided storage mode in the case that image capturing of a still image and a motion image is performed, mask information and HDR mask information for each large group 81 are recorded at the still image file 402 and at the motion image file 401 to be recorded in the subdirectory 94 similarly to the case where image capturing of a single still image is performed.

The image capturing device according to the third embodiment as described above provides the following operations and effects as well as those provided by the first embodiment.

The recording control section of the control unit 23, when HDR is set, records at least one of the mask information 62b and the HDR mask information 62c at either one of the header section 41 or the data section 42. This makes it possible to indicate which pixel among all the pixels HDR is set to at the time of reproduction or the like of the image file 40 and thus makes it possible to provide a user-friendly image capturing device 10.

Variations as described below are also included within the scope of the present invention and one or more variation examples may be combined with the above-mentioned embodiments.

### Variation Example 1

In the first embodiment, the first image information 641 and the second image information 642 have been explained that they are generated when reproducing the image file 40. However, they may be recorded in the image file 40 in advance. In other words, the motion-image and the still-image, which are recorded in different subdirectories 94 as different files for each of the large groups 81 separately in the second embodiment, may be recorded in a single image file 40. In this case, data for one frame quota that is recorded in the image file 40 corresponds to one large group 81.

For instance, a case may be conceived in which two motion-images (first motion-image and second motion-image) that are recorded in two files, separately, according to the second embodiment are recorded in a single image file 40. In this case, starting from the head of the data section 42, data relating to the first frame, second frame, third frame, ... , respectively, of the first motion-image are recorded in chronological order, and subsequently data relating to the first frame, second frame, third frame, ..., respectively, of the second motion-image are recorded in chronological order. In this manner, the load of the reproduction process can be reduced.

As a recording method other than is described above, a recording method may be adopted in which data relating to each frame of the first motion-image and data relating to each frame of the second motion-image are recorded in chronological order with respect to each of the frames. That is, each of the frames of each of two motion-images may be recorded in the form of an array in chronological order of image capturing, such as an array of "the first frame of the first motion-image, the first frame of the second motion-image, the second frame of the first motion-image ...". This enables the recording process to be performed at a reduced load.

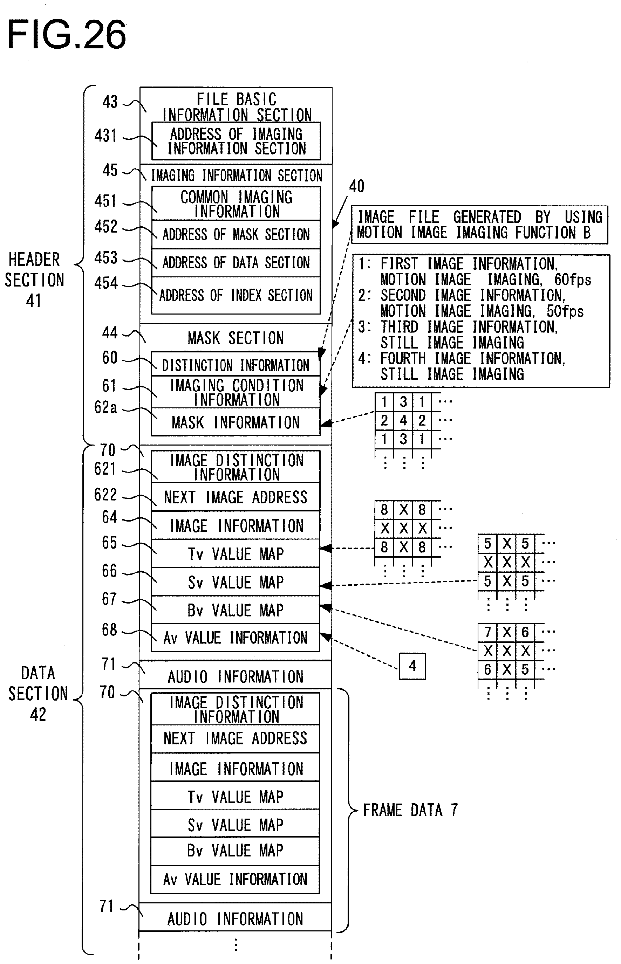

As described above, in the case for example, the first image information 641 and the second image information 642 are recorded in the image file 40 separately, the mask information 62b can be reduced by using the following recording mode. Note that the following explanation is made based on the case in which the image file 40 is generated by using the mixed image capturing function as illustrated in FIG. 14. FIG. 26 schematically shows the structure of the image file 40 thus generated. Note that a set consisting of data for one frame, i.e., one block 70, and a piece of audio information, is referred to as frame data 7 for convenience' sake.

In the image file 40, sets of the frame data 7 each including the image information 64 corresponding to one of the first large group 81 to the fourth large group 81 are individually recorded in chronological order. Note that it is also assumed that the Tv value map 65 and the like included in each frame data 7 naturally correspond to respective pieces of image information. In the case image capturing is performed by using the mixed image capturing function as shown in FIG. 14, the image information 64 obtained by image capturing for the first frame (that is, the first image information 641) is recorded as the first frame data 7 at the data section 42. Sets of the image information 64 obtained by image capturing for the second frame (that is, the first image information 641 and the second image information 642) are recorded as the second and third frame data 7, respectively, at the data section 42. Sets of the image information 64 obtained by image capturing for the third frame (that is, the first image information 641, the second image information 642, and the third image information 643) are recorded as the fourth, fifth, and sixth frame data 7, respectively, at the data section 42.

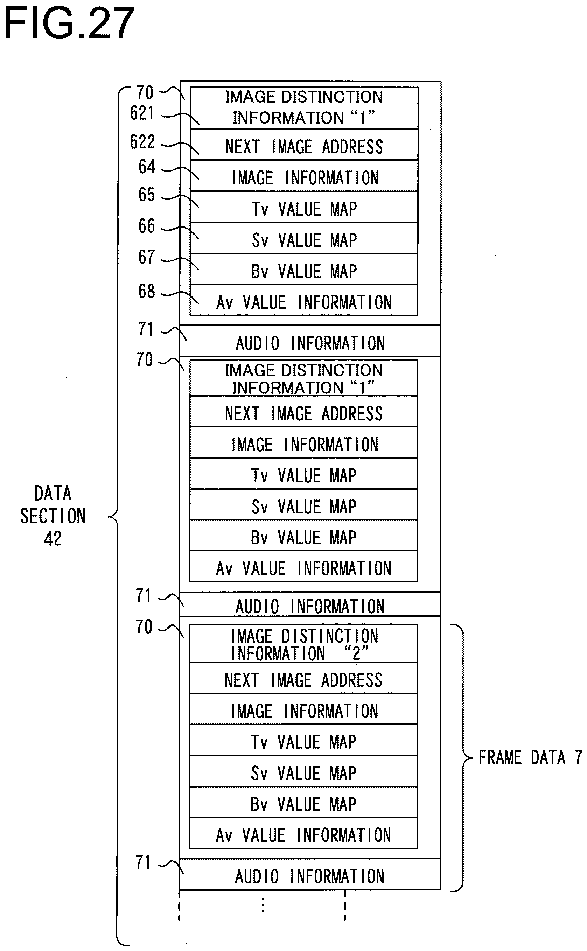

FIG. 26 schematically shows the structure of the generated image file 40. When the image information 64 is recorded as described above, image distinction information 621 that corresponds to a unique number allotted as the distinction information 60 recorded at the mask section 44 of the header section 41 as described above and next image address 622 that indicates the recording position of next frame data 7, instead of the mask information 62b, are recorded for each frame data. That is, as with the case shown in FIG. 27 in which the data section 42 of the image file 40 only is schematically shown, the number "1" indicating the first image information 641 is recorded for the image distinction information 621 in the first and second frame data 7. For the image distinction information 621 in the third frame data 7, the number "2" indicating the second image information 642 is recorded. This enables reduction in size of the recording region as compared with the case where the mask information 62b is recorded at the data section 42 as in the embodiment.

Note that the next image address 622 may be one that indicates the recording position of the frame data 7 in which a next image having the same image distinction information 621 is recorded, instead of the one that indicates the recording position of the next frame data 7.

When reproducing the image file 40 as described above, the control unit 23 searches for image information 64 to be reproduced with reference to the image distinction information 621 and the next image address 622. For searching the image information 642 in FIG. 27, the control unit 23 refers to the image distinction information 621 of the first frame data 7 and determines that it does not represents the image information 642 and refers to the next image address 622 to skip to the second frame data 7. As also the image distinction information 621 in the second frame data 7 indicates that it is not the image information 642, the control unit 23 refers to the next image address 622 to skip to the third frame data 7. As the number "2" indicating that the image information 642 is recorded is recorded for the mage distinction information 621 of the third frame data 7, the read-out section of the control unit 23 reads out the image information 642 from this frame data 7.Therefore, when reading out the image, reading the image information 64, the Tv value map 65, the Sv value map 66, the Bv value map 67, and the Av value information 68 of images other than the desired image may be skipped. This enables shortening of the time required for searching the desired image.

### Variation Example 2

In the explanation of the first embodiment, it has been stated that in the data section 42 of the image file 40 generated by using the motion-image image capturing function B and the mixed image capturing function are recorded the image information 64 and various types of map information according to the array of the unit groups 32 in the image sensor 22. Recording may be performed based on an array different from the array of the unit groups 32. Hereafter, this is described in detail.

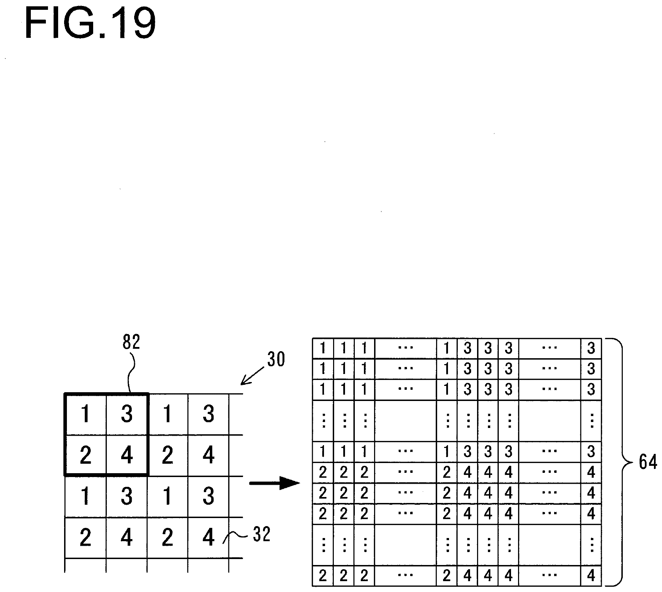

FIG. 19 is an illustrative diagram for illustrating Variation Example 2. Here, the unit groups 32 are classified into four large groups 81 in the same manner as in FIG. 8(b). However, the image information 64 that will be generated by the control unit 23 afterward is not formed by arranging imaging signals according to the array of the unit groups 32. Specifically, the image information 64 is generated by aggregating imaging signals for each large group 81 and then interlinks them. For instance, when the image information 64 is separated into four regions in a 2x2 construction, imaging signals from the unit groups 32 belonging to the first large group 81 are put together in the upper left region. In the lower left region, imaging signals from the unit groups 32 belonging to the second large group 81 are put together. Further, in the upper right region, imaging signals from the unit groups 32 belonging to the third large group 81 are put together. In the lower right region, imaging signals from the unit groups 32 belonging to the fourth large group 81 are put together.

Note that when changing the array of imaging signals in the image information 64 as described above, it is necessary to change the arrays of the Tv value map 65, the Sv value map 66, the mask information 62, etc. in accordance with that array.

The array of the image information 64 may be changed by a method other than this. That is, as long as the array in the image information 64 and the array in other information relating to other imaging conditions (mask information 62, etc.) correspond to each other in the image file 40, any types of arrays may be employed.

### Variation Example 3

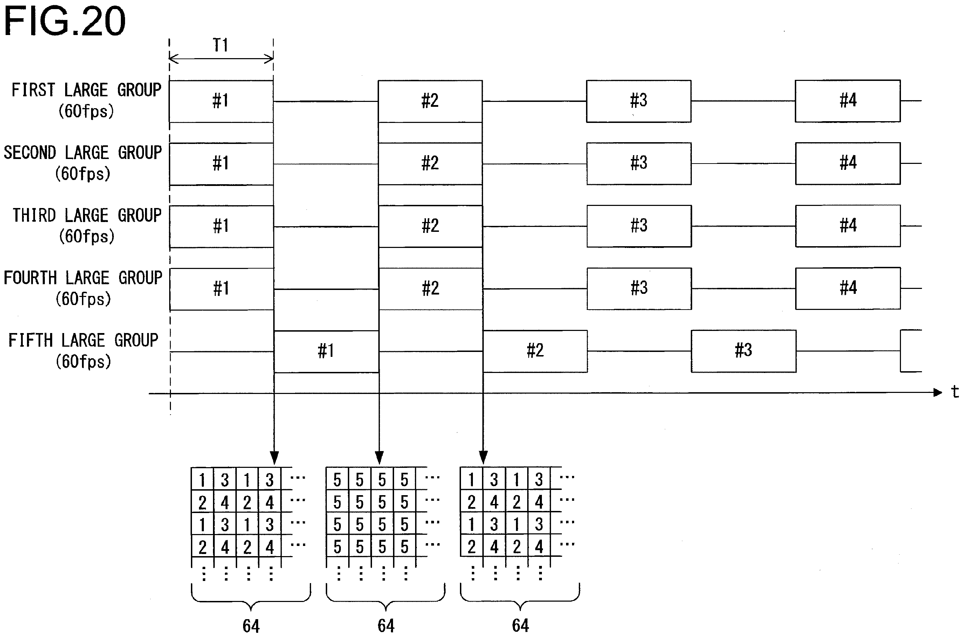

In the case of the motion-image image capturing function B and the mixed image capturing function, the use of the unit group 32 may be changed frame by frame. For instance, it is configured such that as shown in FIG. 20, the unit groups 32 are classified into the first to fourth large groups 81 for odd number frames so that the image information 64 containing four pieces of the image information 641, 642, 643, 644 with different imaging conditions can be obtained. For even number frames, the unit groups 32 are classified into the fifth large group 81 only so that only the single image information 64 can be obtained. That is, a configuration may be adopted in which a plurality of images having different imaging conditions with a relatively small number of pixels and a single image with a relatively large number of pixels are captured in a time shared fashion. Variation Example 3 may be applied to Variation Example 1 or to Variation Example 2 described above.

### Variation Example 4

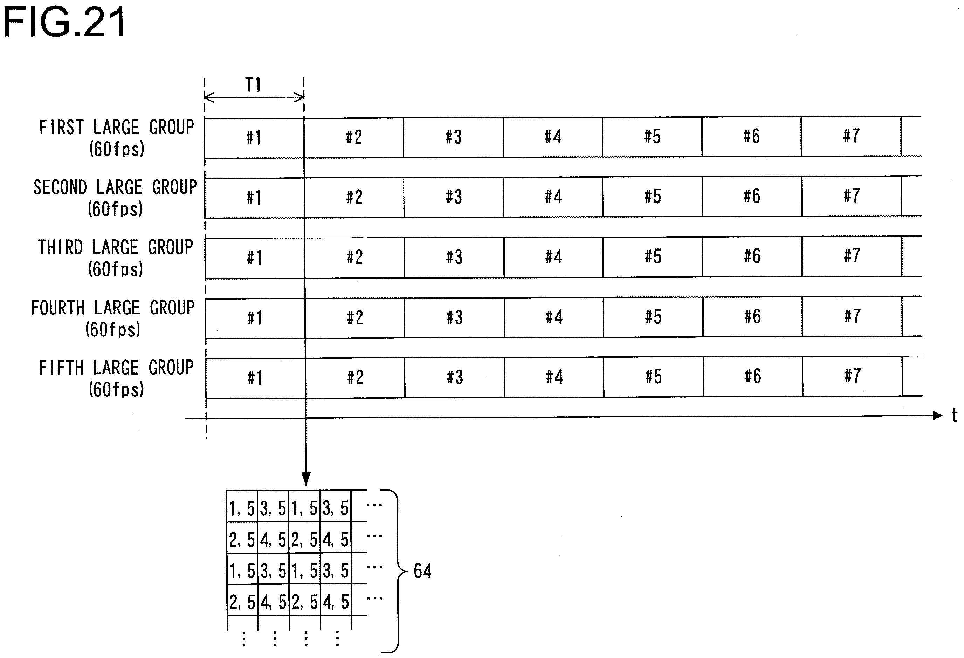

In the case of the motion-image image capturing function B and the mixed image capturing function, a configuration may be adopted in which a single unit group 32 has a plurality of uses. For instance, a configuration may be adopted in which as shown in FIG. 21, the unit groups 32 are classified into the first to fourth large groups 81, respectively and also all the unit groups 32 are classified into the fifth large group 81. In this case, when reproduction (development, etc.) of the image file 40 is performed according to the former classification, the image information 64 that contain the four pieces of the image information 641, 642, 643, 644 can be obtained. On the other hand, when reproduction (development, etc.) of the image file 40 is performed according to the latter classification, the single image information 64 with a larger number of pixels can be obtained.

### Variation Example 5

In the explanation of the still-image image capturing function B, it has been stated that the unit group 32, for which the number "0" is allotted on the mask information 62, is not used in imaging and the image information 64 recorded in the data section 42 contains no information relating to that unit group 32. Also in the case of the still-image image capturing function A and the motion-image image capturing function A, a configuration may be adopted in which the number "0" has the same meaning as that in the case of the still-image image capturing function B.

Also, a configuration may be adopted in which the number "0" in the mask information 62 in the header section 41 indicates that the unit group 32, for which the number "0" is allotted, is not used in image capturing. For instance, when, in the case of the still-image image capturing function B and the motion-image image capturing function B, the whole image capture screen is separated into sets of four unit groups 32 in a 2×2 configuration, different uses are allotted to different unit groups 32, respectively, and if the number of the unit groups 32 in the vertical direction (row number) is odd, one row is left as the balance. In such a case, a configuration may be adopted in which the one row left as the balance is not used in imaging and the number of "0" is allotted to the one row in the mask information 62 that is recorded in the header section 41.

Note that the number of "0" is only an example and other numbers may be used similarly to the above-mentioned number "0".

### Variation Example 6

The structure of the image file 40 may be different from the structure of the image file 40 according to the above-mentioned embodiment. The information relating to the imaging conditions to be recorded in the image file 40 may be different from the information explained in the first embodiment, etc. Recording of some of information, for example, the Sv value map 66 may be omitted. On the contrary, information other than those mentioned above may further be added. The recording method may be different from the one used in the above mentioned embodiment. For example, the Av value information 68, as with, for example, the Tv value and the Sv value, may be recorded in the form of an Av value map obtained by arranging an Av value for each unit group 32 two-dimensionally.

At the data section 42 may further be recorded information different from the various types of information described above. For example, distance information indicating the distance from a subject that is measured by a well-known ranging technology. This distance information may be a so-called depth map obtained by arranging distance from a subject measured for each unit group 32 two-dimensionally. As another example, information relating to the state of the image capturing optical system 21 (for example, focal length, etc.) may be recorded. Such information may be recorded for each frame taking into accounts a change in the information that will occur during motion-image image capturing.

Alternatively, recording of the mask information 62 may be omitted. In this case, the control unit 23 generates information representing use (purpose, role) of each unit group 32, which information is equivalent to the mask information (mask equivalent information) by using the Tv value map 65, the Sv value map 66, and the Bv value map 67 at the time of reproduction. For example, the control unit 23 refers to the Tv value map 65 and/or the Sv value map 66. The control unit 23 refers to the Tv value map 65 and deems the coordinates (x, y) on the Tv value map, at which the same shutter speed is stored, as belonging to the same region.

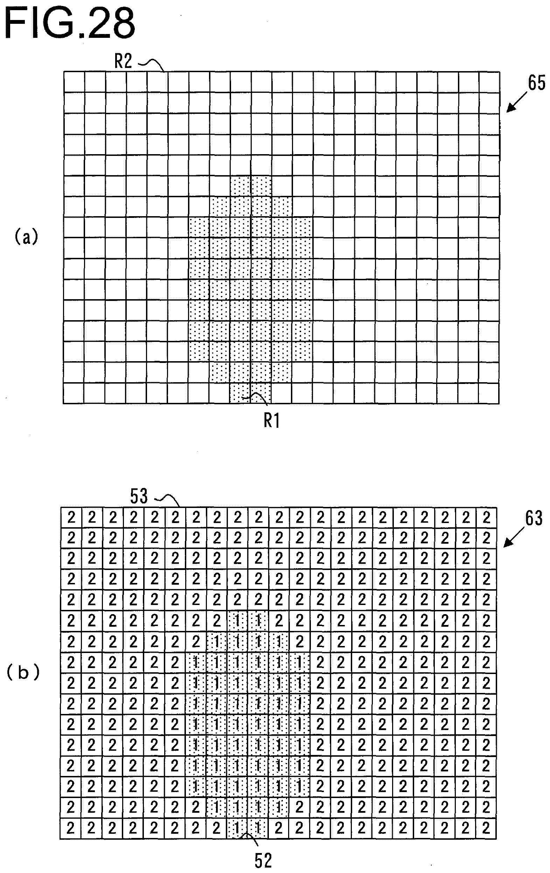

For example, in case regions R1 and R2 that differ in shutter speed are present on the Tv value map 65 as shown in in FIG. 28(a), the control unit 23 judges that respective regions on the image capturing screen 50 that correspond to the regions R1 and R2 correspond to the main subject region 52 and the background region 53, respectively. For example, in case the shutter speed at the region R1 is higher than the shutter speed at the region R2, the specifying section of the control unit 23 deems the region on the image capturing screen 50 corresponding to the region R1 as the main subject region 52 and the region on the image capturing screen 50 corresponding to the region R2 as the background region 53. Then the control unit 23 generates mask equivalent information 63 as shown in FIG. 28(b). In FIG. 28(b), the number "1" is stored at the positions of the unit groups 32 included in the main subject 52 and the number "2" is stored at the positions of the unit groups 32 included in the background region 53.

Note that in case the Sv value map 66 is used, the setting section of the control unit 23 can deem the coordinates (x, y) at which the same ISO sensitivity is stored as belonging to the same region to generate the mask equivalent information 63 similarly. In case both the Tv value map 65 and the Sv value map 66 are used, the setting section of the control unit 23 can deem coordinates at which the same shutter speed is stored and the coordinates at which the same ISO speed is stored as belonging to the same region. This enables division of the region in detail. The control unit 23 can refer to the Bv value map 67 in addition to the Tv value map 65 and/or the Sv value map 66 to make it possible to use the distribution of a subject luminance value for dividing the region and to increase the precision of the division of the region.

The control unit 23 may refer to the Bv value map 67 to generate the mask equivalent information 63. In this case, the control unit 23 deems the coordinates (x, y) at which a subject luminance value within a predetermined range is stored as belonging to the same region and generates the mask equivalent information 63 similarly to the above-mentioned case. In the case the above-mentioned distance information, i.e., the depth map, is recorded, the control unit 23 may use the depth map and the Bv value map 67 to generate the mask equivalent information 63. In this case, the control unit 23 deems, within regions which is classified as the same region by referring to the Bv value map 67, the coordinates (x, y) at which the same subject distance is stored as belonging to the same region and generates the mask equivalent information 63. For example, a region having a low subject luminance value may be divided into a region that corresponds to a black subject and a region that corresponds to a shadow of the subject.

As described above, the control unit 23 can generate the mask equivalent information based on the imaging conditions at the time of reproduction even if no mask information 62 is recorded in the image file 40. This makes it unnecessary to record the mask information 62 at the image file 40 to enable a reduction in the recording region occupied by the image file 40.

Note that in the above explanation, the case has been described, in which the mask equivalent information 63 that corresponds to the mask information 62 generated in the still-image image capturing function A or the motion-image image capturing function A by using the Tv value map 65, the Sv value map 66, and/or Bv value map 67. However, the present invention is not limited to this example. For instance, the control unit 23 refers to the Tv value map 65 and the Sv value map 66 and deems the unit groups 32 corresponding to the coordinates at which the same shutter speed is stored and the coordinates at which the same ISO sensitivity is stored, as configuring the same image information 64 so as to generate the mask equivalent information 63 that corresponds to the mask information 62 that is generated in the still-image image capturing function B, the motion-image image capturing function B or the mixed image capturing function.

Note that in case a plurality of regions of unit groups 32 exists, for which the same imaging conditions are set, such regions may be treated as a single region. Also, in case a plurality of regions of the unit groups 32 exists, for which the same imaging conditions are set, these regions may be treated as a single region if their interval (distance) is relatively narrow or they may be treated as separate regions if their interval (distance) is relatively broad.

### Variation Example 7

In each of the above-mentioned embodiments, the image capturing device, which is a single electronic apparatus that includes the image sensor 22 and the control unit 23, has been explained. However, the present invention is not limited to these embodiments. For instance, the present invention may be applied to an electronic apparatus that controls the image sensor 22 provided as an external device. Hereafter, a mode, in which an image capturing unit 1001 provided with the image sensor 22 is controlled through an external apparatus, is explained in detail.

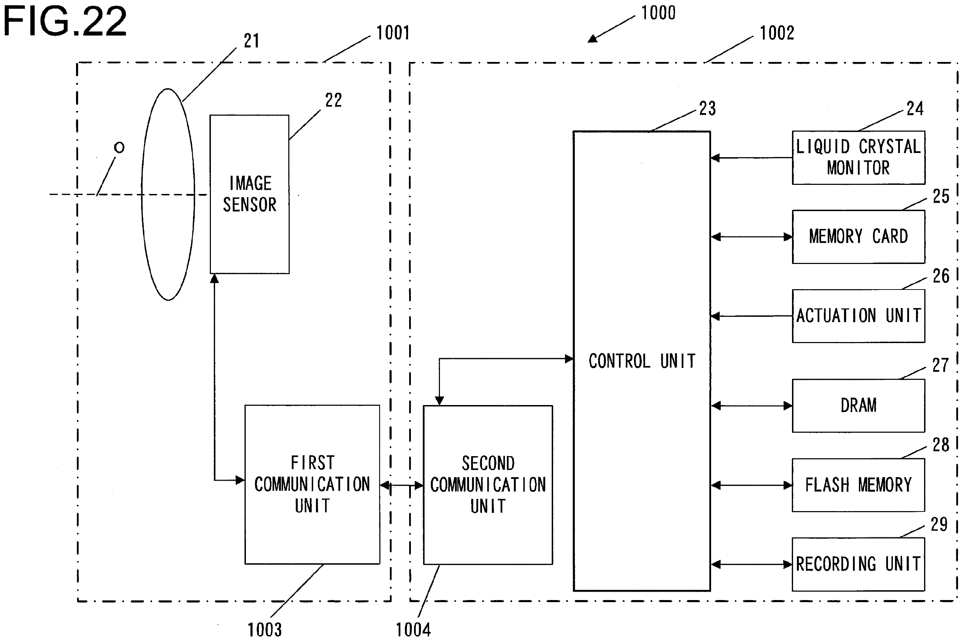

FIG. 22 is a block diagram schematically showing a configuration of an image capturing system according to Variation Example 7. The image capturing system 1000 shown in FIG. 22 includes the image capturing unit 1001 and an electronic apparatus 1002. The image capturing unit 1001 includes the image capturing optical system 21 and the image sensor 22 that are explained in the first embodiment and further a first communication unit 1003. The electronic apparatus 1002 includes the control unit 23, the liquid crystal monitor 24, the memory card 25, the actuation unit 26, the DRAM 27, the flash memory 28, and the recording unit 29 that have been explained in the first embodiment and further a second communication unit 1004. The first communication unit 1003 and the second communication unit 1004 are capable of performing bidirectional data communication by using, for instance, a well-known wireless communication technology and an optical communication technology, etc. Also, a configuration may be adopted in which the image capturing unit 1001 and the electronic apparatus 1002 perform bidirectional data communication via wire-line connection such as cable, etc. to enable bidirectional data communication between the first communication unit 1003 and the second communication unit 1004.

In the image capturing system 1000 according to Variation Example 7, the control unit 23 controls the image sensor 22 by data communication through the second communication unit 1004 and the first communication unit 1003. For instance, by transmitting and receiving predetermined control data to and from the image capturing unit 1001, the control unit 23 sets imaging conditions that differ for each of the unit groups 32 or reads out an imaging signal from each of the unit groups 32.

As described above, in the image capturing system 1000, control on each of the unit groups 32 is performed by the control unit 23. The electronic apparatus 1002 is provided with no image sensor 22. However, by controlling the image sensor 22 (image capturing unit 1001) that is provided outside of the electronic apparatus 1002, the same control as that in the first embodiment can be obtained. That is, the present invention can be applied to an electronic apparatus that has no image sensor 22.

### Variation Example 8

To reduce the data amount of the image information 64, the image information 64 may be compressed by a well-known reversible compression technology before it is recorded. The image information 64 may be recorded in the form of difference values with respect to adjacent pixels. For instance, a configuration may be adopted in which at a position, at which the pixel value (imaging signal) of a specified pixel is recorded, is recorded a difference value between the specified pixel and its left adjacent pixel. Alternatively, a difference value from an average pixel value of all the pixels in a predetermined region may be recorded or a difference value from an average pixel value of all the pixels may be recorded.

In the case of motion-images, a configuration in which a difference value from the pixel value at the same position as that of a previous frame is recorded enables a further reduction of data amount. Alternatively, a configuration may be adopted in which a pixel value is recorded only when the pixel value differs from a pixel value of the previous frame at the same position and no pixel value is recorded when the pixel value is the same as that of the previous frame. This configuration may be applied to the imaging conditions (Sv value, Tv value, etc.). For instance, a configuration may be adopted in which when one frame has the same Sv value as that of a previous frame for a unit group 32, that Sv value is not recorded.

Note that if the image information 64 is recorded in the form that is described as above, it is necessary to perform a process for restoring original pixel values from these forms for reproduction (i.e., at the time of development).

### Variation Example 9

When performing image capturing by using the motion-image image capturing function B or the mixed image capturing function at a frame rate that mutually differs among the large groups 81, the recording control section of the control unit 23 records each frame on the basis of the fastest frame rate. However, the present invention is not limited to this example. For instance, the recording control section of the control unit 23 may record frames at a frame rate that corresponds to the least common multiple of all the frame rates. As shown in FIG. 14, in case motion-image image capturing is performed at 60fps for the first large group 811 and at 50fps for the second large group 812, frames are recoded at 300fps, which is the least common multiple of 60fps and 50fps. That is, the image information 64 based on the image signals from the large group 811, which is set to 60fps, is recorded every five frames and the image information 64 based on the image signals from the large group 812, which is set to 50fps, is recorded every six frames.

### Variation Example 10

In each of the above-mentioned embodiments, the present invention has been explained as has been adopted in an example of a lens integrated type camera. However, the present invention may be adopted in, for instance, an interchangeable lens camera. The present invention may be adopted in not only cameras but also electronic apparatuses with a camera, such as a PC, a cellular phone, a smart phone, a tablet, etc.

The present invention is not limited to the above-mentioned embodiments and so far as the features of the present invention are not impaired, other embodiments that are conceivable within the scope of the technical concepts of the present invention are encompassed within the scope of the present invention.

The disclosures of the following priority application and the publication are herein incorporated by reference:
Japanese Patent Application No. 2016-76527 (filed on April 6, 2016)
WO 2013/164915.

### REFERENCE SIGNS LIST

10···image capturing device, 21···image capturing optical system, 22···image sensor, 23 ···control unit, 24···liquid crystal monitor, 25···memory card, 26···actuation unit, 27··· DRAM, 28···flash memory, 29···recording unit

## Claims

1. An image processing device comprising:
a read-out unit that reads out
an image of a subject captured in a first imaging region of an image sensor to which a first imaging condition is set and an image of the subject captured in a second imaging region of the image sensor to which a second imaging condition is set, and
the first imaging condition and the second imaging condition; and
a specifying unit that specifies a subject to be subjected to image processing from the images by using the first imaging condition and the second imaging condition that have been read out by the read-out unit.

2. The image processing device according to claim 1, wherein:
the first imaging condition is an exposure condition for the first imaging region and the second condition is an exposure condition for the second imaging region.

3. The image processing device according to claim 2, wherein:
the exposure condition for the first imaging region is a charge accumulation time of a photoelectric conversion unit that photoelectrically converts light incident to the first imaging region and the exposure condition for the second imaging region is a charge accumulation time of a photoelectric conversion unit that photoelectrically converts light incident to the second imaging region.

4. The image processing device according to claim 3, wherein:
if the charge accumulation time of the first imaging region is shorter than the charge accumulation time of the second imaging region, the specifying unit specifies the subject captured in the first imaging region as the subject to be subjected to image processing.

5. An image processing device comprising:
a read-out unit that reads out a first imaging condition and a second imaging condition from a recording unit in which the first imaging condition set for a first imaging region of an image sensor and the second imaging condition set for a second imaging region of the image sensor are recorded, the image sensor having a plurality of imaging regions for which respective imaging conditions are set; and
a setting unit that sets, to an image being read out by the read-out unit, a region of the subject captured under the first imaging condition and a region of the subject captured under the second imaging condition.

6. The image processing device according to claim 5, wherein:
the first imaging condition is an exposure condition for the first imaging region and the second condition is an exposure condition for the second imaging region.

7. The image processing device according to claim 6, wherein:
the exposure condition for the first imaging region is a charge accumulation time of a photoelectric conversion unit that photoelectrically converts light incident to the first imaging region and the exposure condition for the second imaging region is a charge accumulation time of a photoelectric conversion unit that photoelectrically converts light incident to the second imaging region.

8. The image processing device according to claim 2 or 6, wherein:
the exposure condition for the first imaging region is an amplification factor of an amplification unit that amplifies a signal based on a charge generated by photoelectric conversion of light incident to the first imaging region at a photoelectric conversion unit, and the exposure condition for the second imaging region is an amplification factor of an amplification unit that amplifies a signal based on a charge generated by photoelectric conversion of light incident to the second imaging region at a photoelectric conversion unit.

9. An image processing device comprising:
a read-out unit that reads out an imaging condition and an image from a recording unit; and
a specifying unit that specifies a subject to be subjected to image processing based on the image by using the read out imaging condition.

10. An image processing device comprising:
a read-out unit that reads out an imaging condition from a recording unit having recorded thereat imaging conditions being set to a plurality of imaging regions of an image sensor, the image sensor being capable of setting respective imaging conditions for the imaging regions; and
a setting unit that sets a region of a subject captured under the imaging condition from an image read out by the read-out unit.

11. The image processing device according to claim 10, wherein:
the imaging condition is an exposure condition for the imaging regions.

12. An electronic apparatus comprising:
an image sensor having a plurality of imaging regions that captures an image of a subject and outputs image data;
a setting unit capable of setting different imaging conditions for the imaging regions; and
an image processing unit that specifies a region to be subjected to image processing from the image data outputted from the image sensor by using an image condition being set by the setting unit.

13. The electronic apparatus according to claim 12, wherein:
the imaging condition is an exposure condition for the image regions.

14. An electronic apparatus comprising:
an input unit that inputs information about positions of a plurality of imaging regions of an image capturing unit for which different imaging conditions can be set, and the imaging conditions for the plurality of imaging regions; and
a generation unit that generates information relating to the imaging regions based on the information about the positions and the imaging conditions inputted by the input unit.

15. The electronic apparatus according to 14, wherein:
the generation unit generates, as the information relating to the imaging regions, information relating to positions of the imaging regions having the same imaging condition.

16. The electronic apparatus according to claims 14 or 15, wherein:
the imaging conditions include an exposure condition of the imaging unit.

17. The electronic apparatus according to claim 16, wherein:
the imaging regions have a photoelectric conversion unit that accumulates a photoelectrically converted charge, and
the exposure condition is accumulation time of charges by the photoelectric conversion unit.

18. The electronic apparatus according to claim 17, wherein:
the generation unit generates data in which the plurality of imaging regions are grouped based on the accumulation time.

19. The electronic apparatus according to claim 18, wherein:
the generation unit generates data in which the imaging regions having the same accumulation time are grouped into one and the same group.

20. The electronic apparatus according to claim 16, wherein:
the image capturing unit has an amplifying unit that amplifies a signal generated based on a photoelectrically converted charge for each of the imaging regions; and
the exposure condition is an amplification factor of the amplifying unit.

21. The electronic apparatus according to claim 20, wherein:
the generation unit generates data in which the plurality of imaging regions are grouped based on the amplification factor.

22. The electronic apparatus according to claim 21, wherein:
the generation unit generates data in which the image regions having the same amplification factor are grouped into one and the same group.

23. The electronic device according to claim 14 or 15, wherein:
the imaging conditions are a luminance of a subject captured by the image capturing unit.

24. The electronic apparatus according to claim 23, wherein:
the generation unit generates data in which the plurality of imaging regions are grouped based on the luminance of the subject.

25. The electronic apparatus according to claim 24, wherein:
the generation unit generates data in which the imaging regions having the same luminance of the subject are grouped into one and the same group.

26. The electronic apparatus according to claim 14 or 15, wherein:
the imaging regions have a photoelectric conversion unit that accumulates a photoelectrically converted charge;
the image capturing unit has an amplifying unit that amplifies a signal generated based on a photoelectrically converted charge for each of the imaging regions;
the imaging conditions include at least one of information relating to a luminance of a subject captured by the image capturing unit, an accumulation time of charges by the photoelectric conversion unit, and an amplification factor of the amplifying unit; and
the generation unit generates information relating to the imaging regions based on at least one of the accumulation time of charges by the photoelectric conversion unit, the amplification factor of the amplifying unit, and the information relating to the luminance of the subject captured by the image capturing unit.

27. The electronic apparatus according to claim 26, further comprising:
a ranging unit that measures distance information of a subject; and
a recording control unit that records the distance information of the subject in a recording unit, wherein
the generation unit generates the information relating to the imaging regions based on the distance information of the subject and at least one of the accumulation time of charges by the photoelectric conversion unit, the amplification factor of the amplifying unit, and the information relating to the luminance of the subject captured by the image capturing unit and.

28. The electronic apparatus according to claim 14, wherein:
the generation unit generates information relating to use of the imaging regions as the information relating to the imaging regions.

29. The electronic apparatus according to any one of claims 14 to 28, further comprising:
a recording control unit that records in a recording unit an imaging condition for each imaging region inputted by the input unit in association with the imaging region.

30. The electronic apparatus according to claim 29, wherein:
the recording control unit records image data generated by the image capturing unit in association with the imaging region in the recording unit.

31. The electronic apparatus according to claim 29, wherein:
the recording control unit records image data generated by the image capturing unit in association with the imaging condition in the recording unit.

32. A reproduction device comprising:
an input unit that inputs image data generated by an image capturing unit including a plurality of imaging regions having mutually different imaging conditions and an imaging condition for each imaging region; and
a reproduction unit that generates information relating the imaging region based on the imaging condition inputted by the input unit and reproduces the image data using the generated information relating to the imaging region.

33. A reproduction program for causing a computer to execute steps comprising:
an inputting step for inputting image data generated by an image capturing unit including a plurality of imaging regions having mutually different imaging conditions and an imaging condition for each imaging region; and
a reproducing step for generating information relating the imaging region based on the imaging condition inputted through the input step and reproducing the image data using the generated information relating to the imaging region.

34. A reproduction method comprising:
inputting image data generated by an imaging unit including a plurality of imaging regions having mutually different imaging conditions and an imaging condition for each imaging region; and
generating information relating to the imaging region based on the inputted imaging condition and reproducing the image data using the generated information relating to the imaging region.

35. The electronic apparatus according to claim 14, wherein:
the input unit inputs information relating to the imaging regions and data indicating distribution of a region set to high dynamic range.
